# EUROPEAN PATENT SPECIFICATION

(11) **EP 1 899 930 B1**
(45) Date of publication and mention of the grant of the patent: **11.08.2010**
(21) Application number: 06756234.8
(22) Date of filing: 30.06.2006
(51) Int. Cl.: G08B 13/196

(54) **SURVEILLANCE SYSTEM AND METHOD FOR DETECTING FORBIDDEN MOVEMENT ALONG A PREDETERMINED PATH**
ÜBERWACHUNGSSYSTEM UND -VERFAHREN ZUM DETEKTIEREN EINER VERBOTENEN BEWEGUNG AUF EINEM VORBESTIMMTEN WEG
SYSTEME DE SURVEILLANCE ET PROCEDE POUR DETECTER UN MOUVEMENT INTERDIT LE LONG D'UN CHEMIN PREDETERMINE

(30) Priority: 30.06.2005 IL 16948705; 04.08.2005 IL 17012405
(43) Date of publication of application: 19.03.2008
(73) Proprietor: Planum Vision Ltd., Rishon Lezion 75709 (IL)
(72) Inventor: RUBIN, Ofer, 75709 Rishon Lezion (IL)
(74) Representative: Minoja, Fabrizio
(86) International application number: PCT/IL2006/000764
(87) International publication number: WO 2007/004217

(56) References cited:
- WO-A-00/66424
- CH-A- 660 339
- US-A- 5 035 382
- US-B1- 6 339 448
- PATENT ABSTRACTS OF JAPAN vol. 2000, no. 02, 29 February 2000 (2000-02-29) & JP 11 305360 A (TAMAGAWA SEIKI CO LTD), 5 November 1999 (1999-11-05)

## Description

### Field of the Invention

The present invention relates in general to a surveillance system. In particular, the present invention relates to a surveillance system for detecting forbidden movement that takes place along a predetermined path.

### Background of the Invention

There are many kinds of activities or movements that are generally forbidden, each of which may take place at a different location along a path and may violate one or more laws. One type of forbidden movement may take place along a road, by vehicle operators as well as by pedestrians. If left undetected, certain activities may directly or indirectly cause harm, resulting in monetary damages and/or physical injury.

For instance, it is widely known that traffic violations, including improper lane changes, passing on the wrong side or without sufficient distance, following too closely (tailgating), failing to obey traffic signals, changing speed suddenly, traveling over the speed limit, turning from the wrong lane, etc. may result in crashes that, in many cases, are fatal.

Police forces throughout the world utilize various tactics to catch and penalize traffic violators. One method is for a police officer to be manned with a radar gun and to be strategically stationed along the side of a road in order to detect and catch a speeding vehicle. Additionally if the officer notices any other type of traffic violation occurring, he may pursue the violator.

However, since the officer is situated at a fixed location, he only has a fixed field of view. Violations that occur elsewhere, or while the officer is not paying careful attention, remain undetected.

Alternatively, a police officer may patrol the road, typically either via car or motorcycle, in order to detect traffic violations.

Prior art surveillance systems for detecting forbidden movement typically comprise stationary as well as mobile cameras.

US 5,225,863 discloses a remotely operated camera system that is mounted on a motorized carriage, which is suspended from a suspension cable. The carriage is driven by a series of pulleys, which thereby drives the camera along the suspension cable.

US 6,339,448 discloses an unmanned visual monitoring system for patrolling large regions. A surveillance camera is mounted underneath a carriage. The carriage rides along two spaced parallel track cables, and is driven by two facing propellers that are each powered by an electric motor. The cables are supported above the ground by a superstructure that extends between the cables and is mounted to an upright vertical member such as a wooden utility pole.

In all prior art surveillance systems, the camera, whether fixed or mobile, is only capable of detecting activity along a fixed plane and at a fixed distance from the road. For cases where a vehicle may be tailgating, the detection of the license plate is difficult due to the angle of the camera with respect to the vehicle.

Other surveillance methods include providing an unmanned aerial vehicle (UAV), such as that disclosed in US 5,035,382, which is remotely controlled, and comprises a payload consisting of a camera and data transmission means.

Some problems associated with surveillance airplanes include mishaps that occur especially during landing and takeoff. During surveillance, these airplanes generally achieve relatively high speeds. During the landing process the airplane must reduce its speed as it nears the landing area. When flying with reduced speed, a loss of aerial stability occurs, and as such, these airplanes are extremely sensitive to aerodynamic changes and disturbances (e.g. changes in wind speed or direction). Hence, it is crucial that the landing area be capable of receiving these airplanes in a safe environment in order to avoid damage to the aircraft.

Additional examples of forbidden movement that take place along a path or road, and which require surveillance and detection include criminal activities carried out by pedestrians, such as car break-ins and/or theft, pickpocketing, mugging, etc. If a police officer is in the vicinity of the criminal activity, he may be alerted to the activity and pursue the criminal. However, when the criminal is out of sight of the police officer, the activity may be performed undetected.

Additional forbidden movement may take place along extended predefined pathways including a canal or defined waterway for boats or irrigation. Boats may be transporting illegal products, and/or they may not be sailing according to the rules of the particular canal or waterway. In cases where the canal extends over a long distance, the coastguard may not have the capability to keep the entire length of the canal under surveillance.

Additional forbidden activities or movement may take place along a network of pipes or ducts that transport materials such as gasoline or the like. Such activities may include vandalism by puncturing the pipe, or in order to illegally siphon off a quantity of the transported material.

In some cases, the path, or road, along which forbidden movement takes place, is an area outside of a restricted area. It is well known that even a physical barrier, such as a wall or a barbed wire fence, is often not enough to prevent intruders from entering a restricted area. A clever intruder will find a way to bypass the barrier and enter the area, while remaining unnoticed. One method of overcoming this problem is to provide manned or unmanned patrol land vehicles for traversing the boundary of the restricted area, thereby enabling the patroller to detect any would-be intruders and prevent them from entering area.

However, this type of patrolling system is generally not fully effective, since the intruder must merely wait until he is out of view of the patroller, before attempting entry to the area. Additionally, land vehicles may find it difficult to traverse certain terrain, thereby hindering their patrolling capabilities.

As described above, US 5,225,863 discloses a remotely operated camera system that is mounted on a motorized carriage, which is suspended from a suspension cable. The carriage is driven by a series of pulleys, which thereby drives the camera along the suspension cable. The elevated camera avoids the difficulties associated with land vehicle patrols. However, an intruder may bypass the camera in a similar manner as with land vehicles, by remaining undetected until he is not in the camera's field of view.

A similar drawback exists with the invention of US 6,339,448, as described herein above.

An additional problem associated with prior art surveillance systems, especially those situated within a restricted area, is that when the camera is stationary and positioned below the height of the fence, the outer, unrestricted area, is partially obstructed by the fence itself. Moreover, when the camera travels along the perimeter of the fence, when reaching certain speeds, and depending on the size of the openings in the fence, the camera's view of the unrestricted area may be essentially completely obstructed by the fence. Even if the camera is situated above the fence so as not to be obstructed by the fence, by mounting the camera within the restricted area, undesirable dead space outside of the area results, where a potential intruder may hide without being detected.

Other surveillance methods include providing an unmanned airplane, such as that disclosed in US 5,035,382, which is remotely controlled, and comprises a camera and data transmission means. However, an unmanned remotely controlled airplane, or, UAV (Unmanned Aerial Vehicle) typically comprises additional, costly and heavy control systems, and are typically not limited to merely traveling around the boundary of a predetermined area. Additionally, since UAV's are limited in the amount of time that can be spent in flight, they must spend valuable time and fuel traveling to and from the landing field, which is generally located at a distance from the area requiring surveillance.

Other problems associated with surveillance airplanes include mishaps that occur especially during landing and takeoff, as described herein above.

It is therefore an object of the present invention to provide a surveillance system and method for detecting forbidden movement that takes place along a predetermined path.

It is an additional object of the present invention to provide a surveillance system for detecting traffic violations that take place along a road.

It is an additional object of the present invention to provide a surveillance system for detecting criminal activity that takes place along a road.

It is an additional object of the present invention to provide a surveillance system that is capable of detecting forbidden movement from various angles with respect to the activity.

It is an additional object of the present invention to provide a surveillance system for detecting potential intruders outside of a restricted area.

It is an additional object of the present invention to provide a surveillance system that is capable of observing an area from an elevated position from the ground.

It is an additional object of the present invention to provide a surveillance system that may be controlled by a remote user.

It is an additional object of the present invention to provide a surveillance system that requires minimal take off and landing procedures.

It is an additional object of the present invention to provide a surveillance system that comprises a safe landing environment.

It is an additional object of the present invention to provide a surveillance system that enables a camera to reach a desired area in a short amount of time.

It is an additional object of the present invention to provide a surveillance system that enables a camera to be situated at a desired area for an extended amount of time.

It is an additional object of the present invention to provide a surveillance system that is capable of providing continual power to a flying object.

### Summary of the Invention

The present invention relates to a surveillance system for detecting forbidden movement having the features as set out in claim 1.

Preferably, the mechanical connector may be chosen from any one of the group consisting of:
a. a rigid shaft;
b. an aerodynamic flexible bow;
c. at least two pivotally connected rigid members; and,
d. a windable flexible cable.

Preferably, the secondary platform is remotely controlled and is capable of independent motion, and is connected to the mobile platform by a cable.

The remotely controlled secondary platform may be chosen from any one of the group consisting of:
a. a remotely controlled helicopter;
b. a VTOL aircraft;
c. a motorized parachute;
d. a paraglider;
e. a remotely controlled blimp; and,
f. a remotely controlled airplane.

Optionally, the secondary platform may be chosen from any one of the group consisting of:
a. a helium balloon;
b. a kite;
c. a parachute; and,
d. a glider;

The mobile platform preferably further comprises a take off/landing mechanism for the secondary platform to land thereon and to take off therefrom. The take off/landing mechanism preferably comprises at least a pad and an extendible arm for connecting the pad to the mobile platform. The take off/landing mechanism preferably further comprises a system for guiding the secondary platform to the take off/landing mechanism, wherein the guiding system comprises:
a. a sensor comprising a transmitter and a receiver situated on the take off/landing mechanism; and,
b. a sensor comprising a receiver and a transmitter situated at the secondary platform;
wherein each of the transmitters is capable of transmitting at least one signal and each of the receivers is capable of receiving at least one signal, and wherein the guiding system interprets the signals to generate control signals to guide the secondary platform during flight and during landing procedures.

Optionally, the take off/landing mechanism further comprises an extendible and foldable net for receiving and securing the secondary platform during landing. Optionally, the take off/landing mechanism further comprises a cushion for absorbing the impact of the secondary platform during landing.

Preferably, the secondary platform is powered by electricity supplied from a remote electrical energy source and transferred to the secondary platform through the mechanical connector. The secondary platform may be powered by any one of the group consisting of:
a. battery;
b. solar;
c. fuel cell; and,
d. gasoline.

At least one motor is preferably connected to propulsion mechanism, for causing the secondary platform to move or hover.

According to the present invention, the path along which the mobile platform travels comprises at least one of any one of the group consisting of:
a. a cable line; and,
b. a rail.

According to an embodiment of the present invention, the mobile platform is driven by any one of the group consisting of:
a. a gasoline motor;
b. an electric motor, wherein the electricity is conducted to the motor through the cable line or rail.

Optionally, the secondary platform further comprises a banner attached thereto, having a public service announcement.

The mobile platform may be towed along the path by the secondary platform.

The present invention preferably further comprises a transferring system comprising at least one transfer platform for transferring at least one mobile platform from one portion of the path to another portion of the path, thereby enabling one of the platforms to pass another. The transfer platform preferably comprises:
a. a first end fixed portion comprising at least one cable supported by an end rail, for allowing at least one mobile platform to travel thereto and therefrom;
b. a second end fixed portion comprising at least one cable supported by an end rail, for allowing at least one mobile platform to travel thereto and therefrom; and,
c. a sliding central portion comprising at least one cable supported by a central rail, wherein the central rail can be aligned with either one of the end rails.

Preferably, the secondary platform if connected to the mobile platform by a windable cable further comprises a reel for paying out and winding in the cable, a spring mechanism at the end that is connected to the reel and a sensor for preventing the cable from being fully paid out. The reel preferably further comprises a sensor for detecting the distance between the mobile platform and the secondary platform.

The present invention if using a cable as mechanical connector preferably comprises a mechanism for disconnecting the cable from the secondary platform.

Optionally, the secondary platform comprises a stabilization system for stabilizing the movement of the platform.

According to some embodiments, the secondary platform comprises wings that are foldable or retractable.

The control station of the present invention preferably comprises a computer comprising an input device and an output device. The control station may further comprise a PDA. The control station preferably controls the movement of the mobile platform, the secondary platform and the camera.

Preferably, the mobile platform is movable along the cable or rail by a system of wheel members comprising upper vertical wheels, lower vertical wheels and horizontal wheels. The lower vertical wheels are separatable from the upper vertical wheels by a spring mechanism.

The present invention optionally further comprises an outer area, outside of a restricted area, wherein at least one mobile platform is situated in the restricted area, and the camera is capable of being positioned at least in the outer area in order to view at least a portion of the outer area.

The present invention further relates to a method for detecting forbidden movement in any direction at one or more locations along a road, the method having the features as set out in claim 32.

### Brief Description of the Figures

- Fig. 1 illustrates schematically a first example of a surveillance system, showing a perspective view of a two-lane highway having light posts spaced along the length of one side, and wherein a camera is attached to a rigid shaft member;
- Fig. 2 illustrates schematically, a side view of a second example of a surveillance system wherein the camera is attached to a bow member;
- Fig. 3 schematically illustrates, a side view of a first embodiment of the present invention, wherein the camera is attached to a helium balloon, and the helium balloon is attached to a windable flexible cable;
- Fig. 4 illustrates schematically, a side view of a third example of a surveillance system wherein the camera is attached to at least two pivotable rigid shaft members;
- Fig. 5a illustrates schematically, a side view of a second embodiment of the present invention, wherein the camera is attached to an airplane, and the airplane is attached to a windable flexible cable;
- Fig. 5b illustrates a third embodiment of the present invention, wherein the camera is attached to a paraglider;
- Fig. 5c illustrates a virtual hemisphere indicating the flight path of the airplane of Fig. 5a, showing the maximum distance in each direction above the cable line that the airplane may fly;
- Fig. 5d illustrates the disconnecting mechanism according to an embodiment of the present invention by which the cable may be disconnected from the airplane;
- Fig. 6 illustrates schematically, the take off/landing mechanism according to an embodiment of the present invention;
- Figs. 7a and 7b illustrate schematically two additional embodiments of the take off landing mechanism, wherein at least one net is provided for assisting in the landing of the airplane;
- Figs. 8a - 8d illustrate a preferred aspect of the transferring mechanism according to an embodiment of the present invention, wherein at least one mobile platform may interchange positions with another mobile platform along the cable;
- Fig. 9 illustrates schematically, a cross-sectional view of a fence that is situated at the border of a restricted area, and comprising a prior art surveillance system;
- Fig. 10 illustrates schematically a further example of a surveillance system wherein the camera is attached to a rigid shaft member;
- Fig. 11 illustrates schematically, a further example of a surveillance system wherein the camera is attached to a bow member;
- Fig. 12 illustrates schematically, a further embodiment of the present invention, wherein the camera is attached to a helium balloon, and the helium balloon is attached to a windable flexible cable;
- Fig. 13 illustrates schematically, a further example of a embodiment of a second surveillance system, wherein the camera is attached to at least two pivotable rigid shaft member;
- Fig. 14a illustrates schematically, a further embodiment of the present invention, wherein the camera is attached to an airplane, and the airplane is attached to a windable flexible cable;
- Fig. 14b illustrates a further embodiment according to the invention, wherein the camera is attached to a paraglider;
- Fig. 15 illustrates a preferred aspect of the transferring mechanism according to an embodiment of the present invention, wherein at least one mobile platform may interchange positions with another mobile platform along the cable;
- Fig. 16 illustrates a preferred embodiment of a supporting post having a base unit for supporting the cable;
- Fig. 17 illustrates a preferred embodiment of the mobile platform of the embodiment of Fig. 5a or Fig. 14 traveling along cables;
- Fig. 18 illustrates an enlarged view of the orthogonal wheel members situated beneath the mobile platform of Fig. 17;
Figure 18A is a back perspective view wheel members of Fig. 18 removed from a cable.
- Fig. 19 illustrates a preferred embodiment of the transfer platform of an embodiment of the present invention;
- Fig. 20 illustrates a further embodiment of the present invention, wherein the mobile platform is an Unmanned Ground Vehicle (UGV); and
- Fig. 21 schematically illustrates an embodiment where the control station comprises a mobile device for controlling the camera to provide images form a desired aspect and zoom.

The present invention is defined by the claims, the contents of which are to be read as included within the disclosure of the specification, and will now be described by way of example with reference to the accompanying figures.

### Detailed Description of the Preferred Embodiments

The present invention is directed to a surveillance system for detecting forbidden movement that takes place in any direction at one or more locations along a predetermined path. Many types of forbidden movement or activity can take place at different locations along a path, for instance, a long road. Nevertheless, due to financial and/or manpower constraints, among others, only a limited number of law enforcers or cameras are positioned along such an area in order to detect such activities. By providing a surveillance system having at least one camera capable of traveling along the length of the road, forbidden movement or activity can be detected at all locations along the area.

The term, "road" as used herein, includes, and is interchangeable with the term, "path" and is understood to include any defined path, including a highway, street or thoroughfare, or passageway along or across which a vehicle, a pedestrian and/or an animal may travel, as well as a canal or waterway along which a boat may sail, as well as a pathway having a system of pipes through which a predetermined material is transported, and where forbidden movement may take place.

The term, "forbidden movement" as used herein, includes traffic violations, as well as all types of unlawful activity such as criminal activity including mugging, pickpocketing, car break-ins and/or theft, as well as unlawfully transporting goods or transporting unlawful goods. "Forbidden movement" also includes any movement that may be lawful, yet forbidden on other grounds, such as movement of animals outside of a predefined area or path. Additionally, the term, "forbidden movement" may refer to activity that, although presently may not be forbidden, may potentially lead to or result in unlawful activity, such as the activity of a potential intruder. The detection of "forbidden movement" may also refer to the detection of the status of one or more objects, either stationary or in motion where forbidden movement may potentially occur at a future time, for instance, a crack or leak in a pipe or system of pipes through which a material is transported.

The term, "restricted area" as used herein, refers to a defined area having a dividing structure or demarcation, real or virtual, such as a fence, wall or stretch of unoccupied land, delineating the restricted area's border, and for preventing unwanted entry into the restricted area.

The term, "border" as used herein, refers to the perimeter of the restricted area. The restricted area is situated on one side of the border, and the outer area is situated on the other side of the border.

The term, "outer area" as used herein, refers to the area outside of the restricted area, in which activity is observed via the camera of a surveillance system.

The term, "camera" as used herein, refers to any image acquisition device which is capable of receiving optical rays (stills, video) or electromagnetic radiation (RADAR based), reflected from an object and generate a visible image of this object.

The term, "dead space" as used herein, refers to a portion of the outer area, in which activity is unable to be observed via the camera of a surveillance system.

The terms, "aerodynamic force", "buoyant force" and "lift force" are used interchangeably herein, and describe forces that keep an airborne mechanism in the air.

Although the below description of an application of the system of the present invention is presented in the first example particularly in terms of a system of detecting traffic violations, it is understood that the system may be utilized for all types of unlawful activity, and along all types of roads, as described above, *mutatis mutandis*.

Reference herein to the position of the camera relates in particular to the physical location of the camera device, and not the angle at which the lens is oriented relative to the ground. Nevertheless, the lens angle may be controlled remotely and repositioned and/or reoriented accordingly, as described herein below.

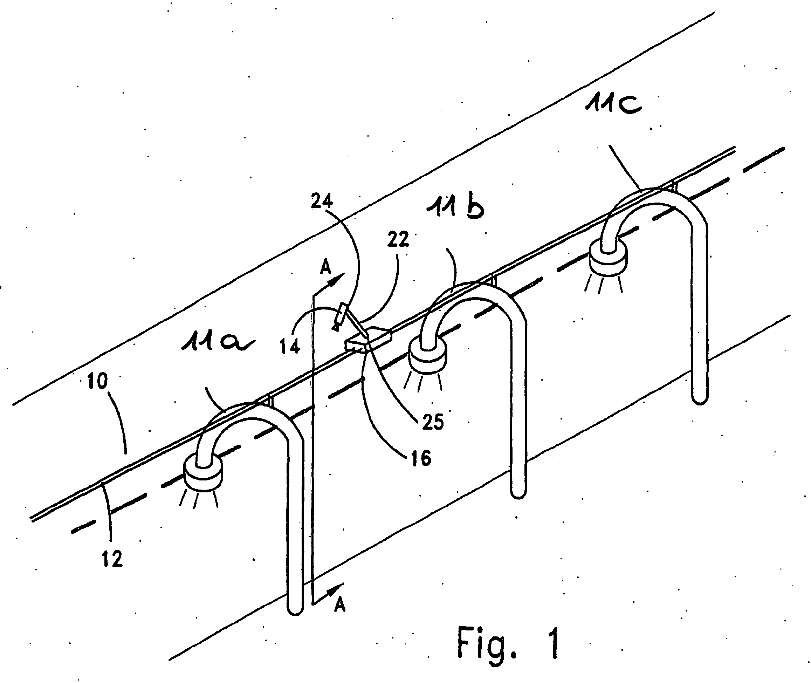

A first example of a surveillance system is shown in Figs. 1 through 8d. Fig. 1 shows a schematic perspective view of a two-lane highway (10) having light posts (11a), (11b), (11c), spaced apart along the length of one side of highway (10). The mobile platform (16) travels along cable line (12) along the length of the highway (10), and has camera (14) connected thereto via a mechanical connection. In this example, the mechanical connection takes the form of a rigid shaft (22). Rigid shaft (22) comprises an elongated rod made of a single member, which is joined, at one end (24), to camera (14), and, at the other end (25), to mobile platform (16). Rigid shaft (22) may be straight or curved, and is positioned such that one end (24) is elevated, preferably above highway (10). Ends (24), (25) may be fixedly joined to camera (14) and mobile platform (16) respectively, or ends (24),(25) may be rotatably joined thereto, wherein the rotation of shaft (22) may be controllable by a motor (not shown).

Mobile platform (16) may be a trolley-type transporting device, such as that described in US 5,225,863, which travels along the path of a track via cable line (12).

Typically, camera (14) comprises at least one of IR, UV and/or day/night capabilities, as well as voice and motion sensors.

Cable line (12), which may consist of any elevated railway system, including a conventional rail containing at least two cables, rails or tracks, or a monorail, may be supported by the light posts (11a), (11b), (11c), as shown, or by any existing support structures along the length of a road, such as a fence, dedicated supporting posts situated along the length of a fence, electrical poles, trees, etc., or a combination thereof. Alternatively, cable line (12) may travel along cables or tracks that run essentially along the ground, or slightly elevated therefrom. The support structure may be situated along either side of the highway, as shown, or, for two-way highways, along the divider between lanes. Additionally, cable line (12) may run above, below or along the side of mobile platform (16), or, alternatively, cable line (12) may run through mobile platform (16), as in US 5,225,863. When utilized along a canal or waterway, supporting structures may extend upwards from the bed of the waterway. Additionally or alternatively, the cable line (12) may be supported by any system of floating bodies that run along the length of the waterway.

The length and angle of shaft (22) with respect to mobile platform (16) is determined in connection with the elevation of mobile platform (16) off the ground and distance from highway (10), and height of a fence (not shown).

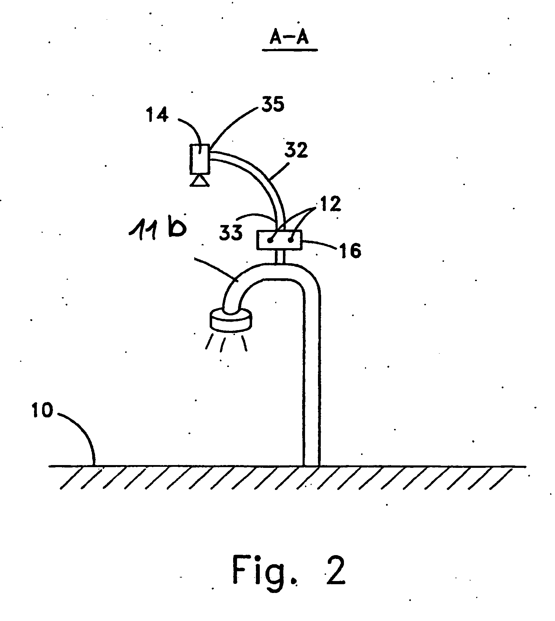

A second example of a surveillance system is shown in Fig. 2 in a schematic cross-sectional side view taken along A-A of Fig. 1, and comprises all of the elements of the first example as described above, *mutatis mutandis,* with the following differences. In this example, the mechanical connection is provided in the form of a flexible bow (32) disposed such that the free end (35) of bow (32) is disposed toward highway (10). At least one wing-like protrusion (not shown) extends from each side of the free end (35) of bow (32), in a direction parallel to the direction of travel of mobile platform (16). As mobile platform (16) travels along cable line (12) the motion of the wing-like protrusion through the air creates aerodynamic force (lift) on the wing like protrusion. Thus, depending on the speed at which mobile platform travels, bow (32) is raised and lowered accordingly. Additionally, or alternatively, the wing-like protrusion is attached to the camera itself. The lower end (33) of bow (32) is preferably pivotably attached to mobile platform (16) in order to allow bow (32) to pivot essentially orthogonal to the direction of travel of mobile platform (16). The rotation of bow (32) about the axis of the pivot at lower end (33) is preferably restricted to a predetermined angular limit.

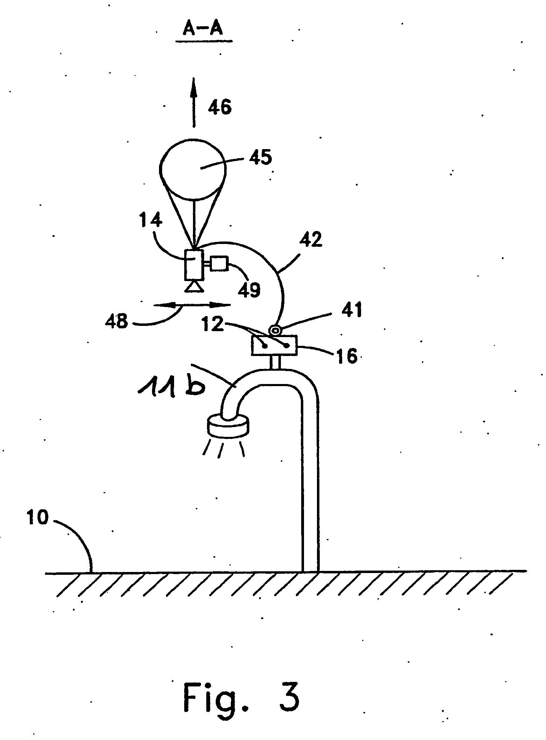

A first embodiment of the present invention is shown schematically in Fig. 3, and comprises all the elements of the first embodiment as described above, *mutatis mutandis,* with he following differences. In this embodiment, the mechanical connection of the surveillance system is provided in the form a woundable flexible cable (42). Additionally, camera (14) is mounted on a secondary platform that creates or is acted upon by aerodynamic lift forces, such as a helium balloon (45), a kite (not shown), a parachute (not shown), or a glider (not shown). The secondary platform is connected to mobile platform (16) via cable (42).

The position of camera (14) in Fig. 3 is controlled by the combination of the buoyant force (shown by arrow (46)) of helium balloon (45), which creates lift that forces balloon (45) upward, and motor (49), which is connected to a propulsion mechanism that causes balloon (45) to move in a horizontal direction (shown by arrow (48)), or hover with respect to ground (10). Additional forces, such as gravity, wind and tension in the cable, act on the balloon as well. More than one motor (49) may be provided for directing balloon (45) in a desirable direction, in particular, in order to counteract the wind forces that force balloon (45) in an undesirable direction. Windable flexible cable (42) may be paid out or wound in appropriately by reel (41), according to the desired positioning of the camera (14).

When camera (14) is connected to mobile platform (16) via, for example, a kite, the aerodynamic force is created by the existing wind, as well as the lift that is produced by the wind that flows over the kite as mobile platform (16) travels along cable line (12), and pulls the kite through the air.

For the second example and the first embodiment of the present invention, in order to correct distortion of the images received by camera (14) due to instability of the camera resulting from the blowing of the wind, a camera having fast image gathering capabilities, is utilized.

By utilizing windable flexible cable (42) the user is capable of positioning the camera (14) at locations at which he is unable to position the camera (14) of the first and second examples.

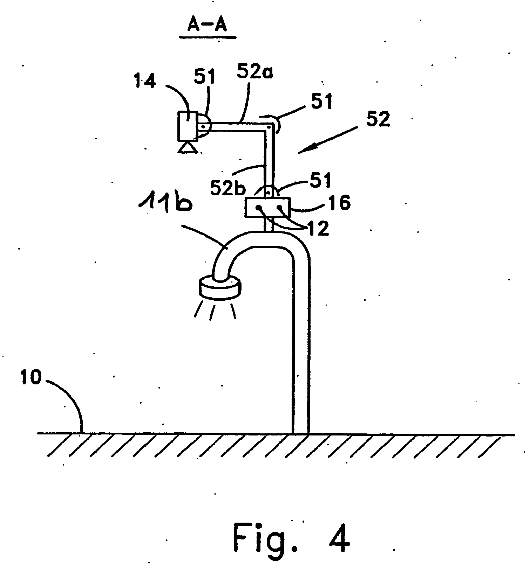

A third example of a surveillance system is shown schematically in Fig. 4, and comprises all the elements of the first example as described above, *mutatis mutandis,* with the following differences. In this example, the mechanical connection of the surveillance system comprises a rigid shaft (52) having two members (52a), (52b), each pivotally joined, at one end, to each other, and at their other end, to camera (14) and to mobile platform (16), respectively. Alternatively, more than two shaft members may be present. The shaft members (52a), (52b) pivotably rotate about respective axes, as indicated by arrows (51). At least one motor (not shown) controls the movement of each shaft member (52a), (52b) and the camera (14) relative to each other.

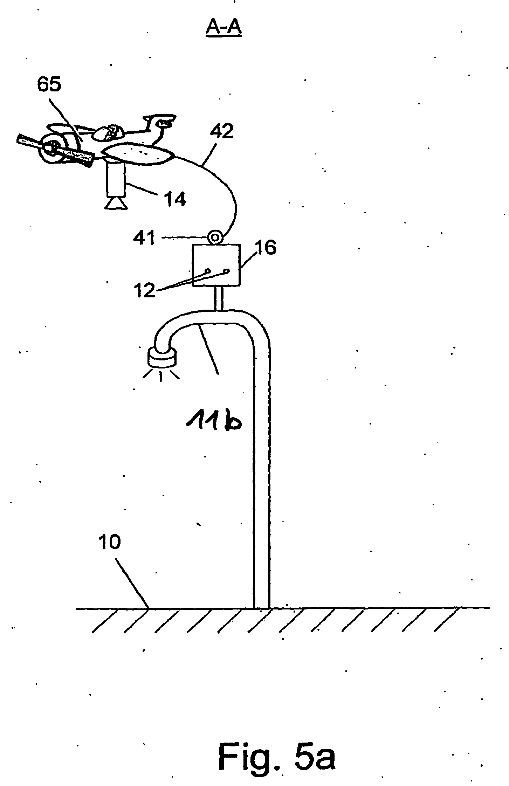

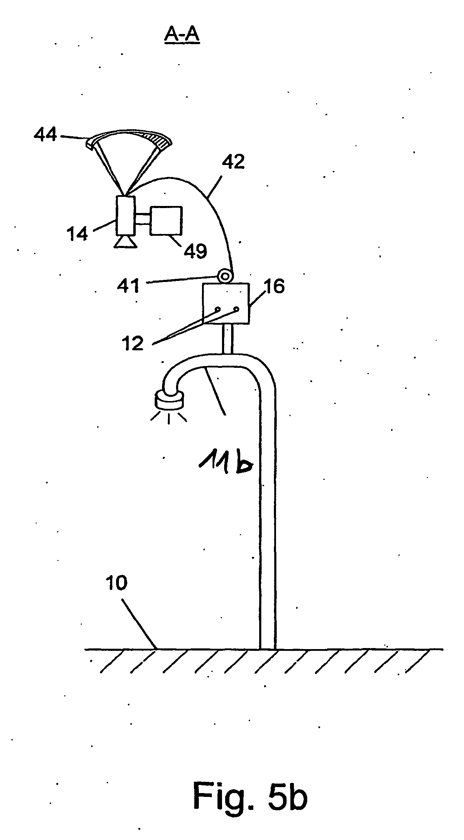

A second and third embodiment of the present invention are shown schematically in Figs. 5a and 5b, and comprises all the elements of the first embodiment as described above, *mutatis mutandis,* with the following differences. In this embodiment, camera (14) is supported by a remotely controlled secondary platform, such as a remotely controlled airplane (65) (also referred to herein as a UAV (unmanned aerial vehicle), a CUAV (cable-UAV) or a TCUAV (train-cable-UAV)). Airplane (65) is capable of traveling in all desired directions, but is nevertheless limited in the distance it may travel, at least by the length of woundable flexible cable (42). Although, as described above, the flight path of conventional remotely controlled airplanes is generally not restricted in this manner, in the present invention, a restricted flight path is preferable in order to maintain flight relatively close to the area requiring surveillance along a highway (10). Additional advantages associated with joining airplane (65) to mobile platform (16) via cable (42) are described herein below. This enables the airplane (65), and particularly the camera, to be repositioned to different desired locations in a short amount of time. Alternatively, a remotely controlled helicopter (not shown), a motorized parachute (not shown), a paramotor glider (paraglider) (44) (see Fig. 5b), a remotely controlled blimp or zeppelin type of aircraft (not shown) or any Vertical Take-Off And Landing (VTOL) aircraft may be utilized.

The airplane (65) is capable of positioning camera (14) at desirable angles with respect to a vehicle moving along road (10). This is necessary in cases where the vehicle's license plate is otherwise obstructed or difficult to detect, for instance, when the vehicle is tailgating or being tailgated.

According to a preferred embodiment, electrical energy is transferred to the airplane (65) from an external source through woundable cable (42), which is utilized to fly airplane (65) as well as to power the camera and other onboard equipment. Additional control signals and data are transferred between a remote control center and the airplane (65) (and camera 14) via woundable cable (42). This allows virtually unlimited time in the air, as opposed to the less favored, but possible alternative of using a gasoline engine.

It should be further emphasized that the arrangement of joining airplane (65) to mobile platform (16) via cable (42) runs counter to the conventional and intuitive methods of utilization of a UAV, which typically make use of the capability of the aerial vehicle to fly without limitation by a defined path. The many advantages associated with the arrangement of the present invention, as described herein, have not been exploited until now, and are therefore inventive over all known prior art UAV systems. For instance, the airplane according to an embodiment of the present invention does not require a costly backup flight system in cases of failure of the main system, as described herein below. Additionally, a complex flight control system is not necessary since the flight course is limited to a predetermined path.

According to another aspect of the second or third embodiment any other powering means, such as solar, battery or fuel cell may be preferable, such as when requiring a back-up or replacement energy source. According to one aspect of the second embodiment (Fig. 5a), the lower portion of cable (42) (i.e. the portion of cable (42) that is attached to reel (41) and extends partially to airplane (65)) is capable of conducting electricity therethrough, whereas the upper portion of cable (42) does not conduct electricity. In this aspect, powering means, such as solar, battery or fuel cell provide power to airplane (65) during its initial flight. If a back-up or replacement power source is required, or if the power source requires recharging, the upper portion of cable (42) may be reeled in to airplane (65) and airplane may connect to the lower portion of cable (42) for receiving electrical power therefrom. A suitable plug portion extends from the lower portion of cable (42) for being inserted to a suitable socket portion situated at the underside of airplane (65). Alternatively, the plug portion is situated at the underside of airplane (65) and the suitable socket portion is situated at the lower portion of cable (42).

According to one aspect, an internal power source, such as a motor (not shown), drives mobile platform (16) along cable line (12). Alternatively, cable line (12), which is comprised of electrical cables, provide power in order to drive mobile platform (16) along cable line (12).

Airplane (65) optionally comprises an automatic take off and landing mechanism, stall protection, and an uncomplicated control system, as known according to prior art aerial systems.

Airplane (65) preferably comprises a stabilization system having a dynamic parameter set that adjusts the stabilization parameters in accordance with weather conditions, the strength of airplane (65), weight changes, etc. One such stabilization system is described in WO 2006/035429.

Preferably, reel (41) comprises at least one sensor for preventing woundable cable (42) from being fully paid out until it becomes taut. Factors such as wind speed and direction, the strength of airplane (65), the distance of airplane (65) from mobile platform (16) and the length of cable (42) are taken into account. When airplane (65) is in flight, a taut cable (42) may prevent airplane (65) from proper flight. Therefore it is preferable to maintain the length of the paid out cable (42) greater than the distance between airplane (65) and mobile platform such that cable (42) has slack at all times. Additionally or alternatively, a spring is situated at the end of cable (42) fixed to reel (41) for preventing cable from becoming taut in case cable (42) is fully paid out.

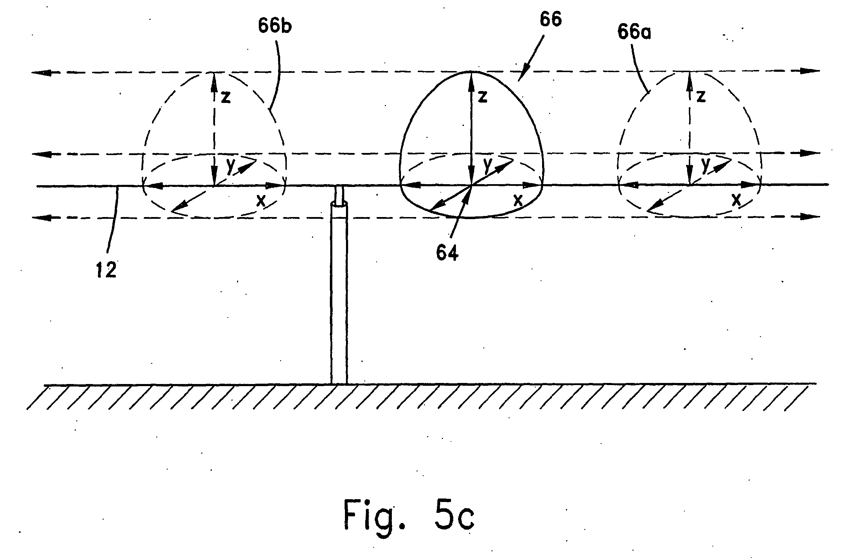

Fig. 5c schematically shows a virtual hemisphere indicating the flight path limit of airplane (located at the origin of the coordinate axis as shown by arrow (64)) when attached to a mobile platform (not shown) via a cable (not shown). When stationary, the maximum distance that airplane (65) may fly is indicated by dome (66). It is understood that there exists a similar dome below cable (12) limiting the flight path of airplane (65), but for purposes of clarity, only the upper dome (66) and flight path is shown and described. Airplane (65) may travel along all directions of the planes formed by the x-y- and z- axes. Additionally, the movement of boundary dome (66) of airplane (64) exists along cable (12) when airplane (65) travels therealong.

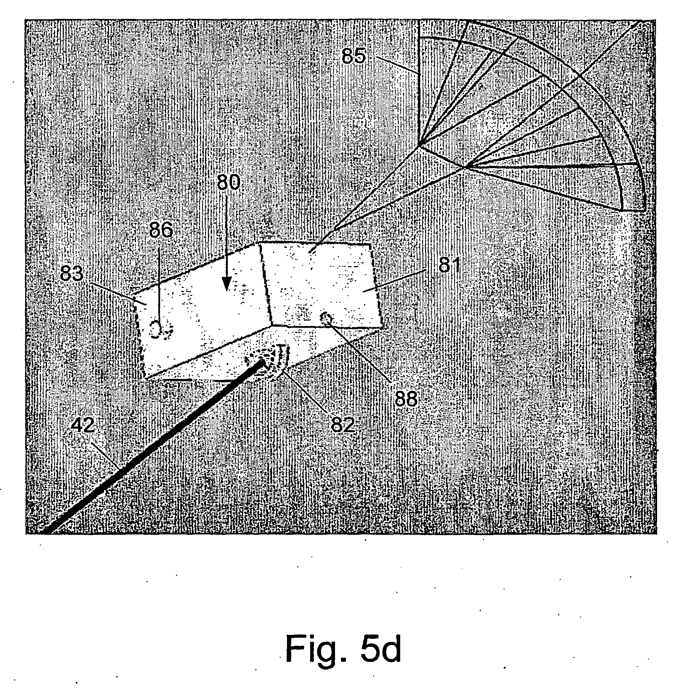

Referring to Fig. 5d, for situations wherein forbidden activity occurs outside of the field of view of the camera (not shown in the figure), or to allow airplane (65) to reach a destination that it is not capable of reaching when restricted by cable (42), so that a particular image may be viewed at a more desirable angle or at a closer range, airplane (65) comprises a mechanism for disconnecting cable (42) therefrom. Preferably, the distal end of cable (42) is connected to airplane (65) via a compartment (80), which comprises a releasable parachute (85). Cable (42) is joined to ring (82) situated at the lower face of compartment (80). Compartment (80) is joined to airplane (not shown in this figure) by at least one releasable pin (not shown) which is released from aperture (88) on a side wall (81) of compartment. When desired, the pin may be released by a first spring mechanism (not shown), allowing a second spring mechanism (not shown) situated between the airplane and compartment (80) to expand forcing cable (42) to drop to the ground. In order to prevent cable (42) from touching the ground, compartment (80) comprises a mini-parachute (85). When the pin is released, mini-parachute (85) is simultaneously released from its compartment to allow cable to fall slowly to the ground. Reel (41) preferably reels in cable (42) before the free end of cable (42) reaches the ground. In some applications, disconnecting airplane (65) from cable (42) may be necessary to intercept or shoot at an aerial object launched by an enemy. It is understood that when airplane disconnects from cable (42), electrical power is no longer transferred through cable (42) thereto. During the disconnecting procedure, the electrical connector, or plug (not shown) is pulled out of socket (86) situated at the side wall (83) of compartment (80).

The present invention may additionally be used for identifying and tracking foot prints or other prints in the ground by flying in close proximity to the ground. Land mapping and/or scanning, and geomining using a Geographic Information System (GIS) may also be performed using the present invention. GIS may additionally provide information regarding surrounding objects in proximity to airplane (65), such as a tree or pole, which may limit its flight path.

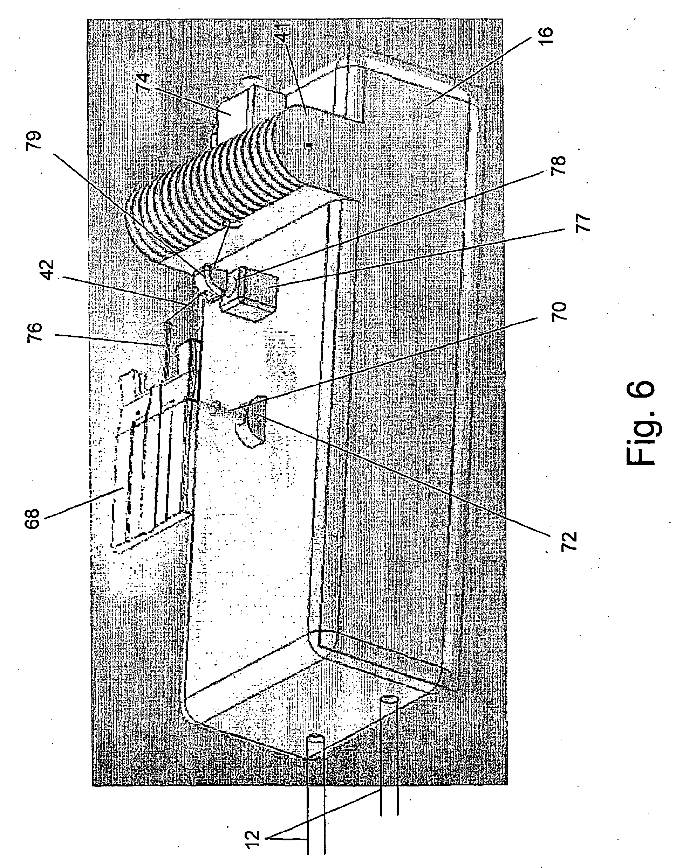

According to a preferred embodiment, Fig. 6 shows a take off/landing mechanism comprising pad (68), which is connected to mobile platform (16) via telescopic arm (70), which, in turn, pivots about the axis of wheel (72). After take off, the airplane, arm (70) extends, and after landing, arm (70) retracts. Arm (70) may be situated in any convenient location along mobile platform (16), and may fold or compress in any manner including telescopically, as shown.

As described above, loss of stability resulting from low flying speeds during landing may lead to a crash landing. In the present invention, because airplane (65) lands on a moving platform, air speed relative to the ground does not become zero, and therefore, airplane (65) maintains stability during landing, thereby reducing the chances of a crash landing. Alternatively, airplane (65) may land while mobile platform (16) is stationary.

The present invention according to the embodiment of Fig. 6 comprises a further advantage over conventional UAV's in that whereas some UAV's may be incapable of flying during extreme weather conditions, and are therefore, essentially useless as surveillance tools during this time, airplane (65) may patrol around a desired path while in a landed position on pad (68), thereby at least partially performing its mission even during non-optimal weather conditions.

Landing guide (76) joins pad (68) to cable (42) for further assisting in guiding airplane (65) along a desired path during landing. Landing guide (76) may alternatively be connected to arm (70) or mobile platform (16) itself. Additionally or alternatively, cable (42) may be further stabilized by a controllable mechanism, which comprises base (77) and guide (79), rotatably joined by pivoting member (78).

Additionally or alternatively, a system for guiding airplane (65) to land on pad (68) is provided, comprising at least one sensor (not shown) joined to take off/landing mechanism, which is preferably a transmitter/receiver that sends and receives signals to and from a receiving/transmitting sensor located on the underside of airplane (65). The system interprets the sensed signals and uses them to generate control signals to fly (or, pull) the plane to a safe landing, for instance, by indicating the paid out length of cable (42) and the distance of airplane (65) from pad (68). The transmitter may additionally transmit data between objects, such as additional surveillance airplanes, that are within range of airplane (65).

According to a preferred embodiment, airplane (65) comprises an automatic flight control system, which utilizes GPS as well as autopilot, for guiding and positioning during flight with respect to other mobile platforms (16) that are present in the surveillance system, to identify the location of the gathered images, etc. A global control system, for verifying open air space for the flight path is possible but not required. Additionally or alternatively, sensors (not shown) are positioned at a plurality of locations along the path of mobile platform (16), such as at the supporting posts of cable (12) for providing a signal indicating the precise geographic coordinates of each sensor. Thus, when a mobile platform (16) is situated at or near a particular sensor, the geographic coordinates of that mobile platform may be known.

Optionally, airplane (65) comprises a visual instrument such as RADAR for detecting surrounding objects.

According to a preferred embodiment, airplane (65) comprises an emergency landing mechanism, wherein the mobile platform stops traveling along cable (12) and airplane (65) is immediately forced to land, in cases such as loss of power from the energy source or loss of communication with the GPS signal. Additionally or alternatively, a back-up power source is provided, as described above, to either allow airplane (65) to continue to fly, or to avoid airplane (65) from crashing as it performs its emergency landing.

In order to minimize the number of movements that airplane (65) is required to perform, particularly during the landing procedure, mobile platform (16) is preferably positioned along cable (12) at the closest location to airplane (65) without allowing cable (42) to become taut, as described herein above.

According to one aspect of the second embodiment, a banner (not shown) having a public service announcement is attached to airplane (65).

According to another aspect, one or more additional cameras (not shown) is directly affixed to mobile platform (16).

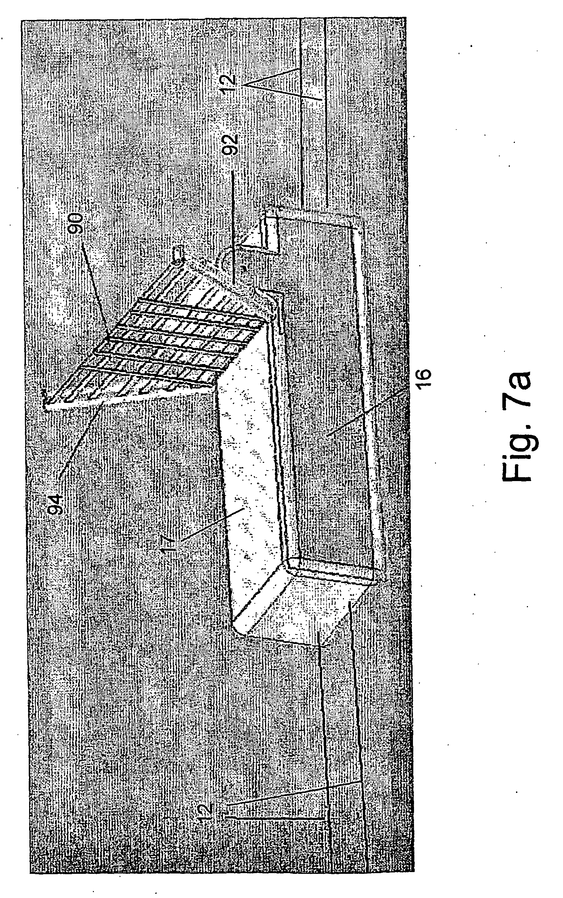

According to another aspect of the second embodiment, an expandable net (90) is shown in Fig. 7a, connected to telescopic arms (92), which extend from mobile platform (16). Net (90) is adapted for receiving the surveillance airplane as it returns to the pad (not shown) for landing. Net (90) may be expanded for landing or folded in order to allow airplane (65) to take off, by extending and retracting telescopic arms (92), respectively. Telescopic arms (92) may additionally or alternatively be pivotably foldable, or may take any other form in order to expand and fold net (90) when desired. Preferably, arms (92) comprise a cushion (94) for absorbing the impact of the wings of airplane (65), thereby providing a safe landing environment, and preventing possible damage to the wings of airplane (65) during landing. Cushion (94) comprises any padding or sponge-like material. Additionally or alternatively, the upper surface (17) of mobile platform (16) comprises one or more cushions (not shown) for providing a safe landing environment.

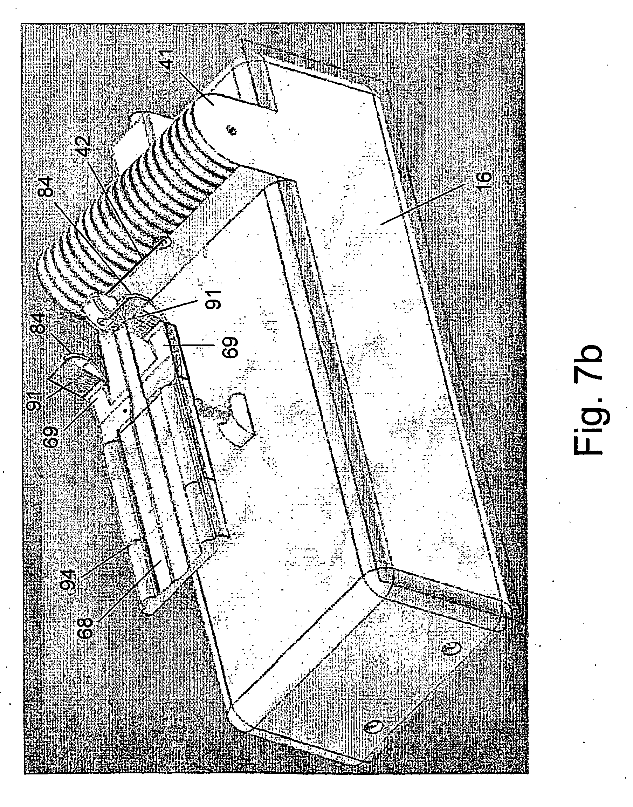

Fig. 7b shows an alternative aspect of the second embodiment, wherein pad (68) comprises two surfaces (69) that extend towards reel (41). Each of two nets (91) is hingedly attached at its one end to each surface (69), and at its other end to arced members (84). Cushion (94) is situated along the longitudinal edges of pad (68), for absorbing the impact of the wings of airplane (65) during landing. When cable (42) further pulls airplane (65) (not shown in the figure), the wings contact nets (91). If desirable, nets (91) may be rotated inwardly about their hinges, thereby causing arced members (84) to fold over and secure the wings on pad (68).

Optionally, the wings of airplane (65) may be foldable or retractable subsequent to landing to avoid potential damage to the wings while not in use.

According to a preferred embodiment of the present invention, more than one mobile platform (16) travels along cable line (12), wherein each mobile platform (16) may comprise any one of the embodiments as described above. Since all mobile platforms (16) travel along the same cable line (12) like beads on a string, the only way for one mobile platform (16) to switch positions or to pass each other along the cable line (12) is to be removed from cable line (12) and replaced at a different location along the cable line (12).

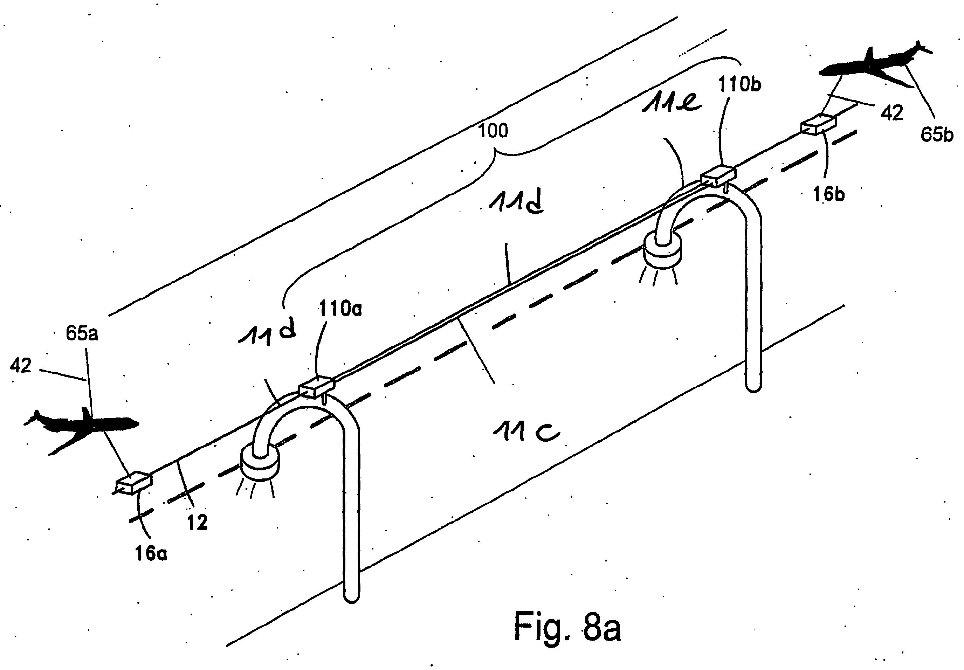

Fig. 8a shows two mobile platforms (16a) and (16b), with remotely controlled airplanes (65a) and (65b) connected respectively to each platform (16a), (16b) via cable (42). When it is desired for mobile platform (16a) to interchange positions with mobile platform (16b) along cable (12), transferring system (100) of the present invention is utilized, as described herein below.

It should be noted that although cable lines (12), (12b)-(12d) shown in Figs. 8a - 8c comprise only one cable per line, and the accompanying description, therefore, relates to an embodiment with only one cable, this is for illustrative purposes only. As described above, the cable lines of the present invention may comprise any number of cables, and thus, operates according to the principles described herein, *mutatis mutandis.*

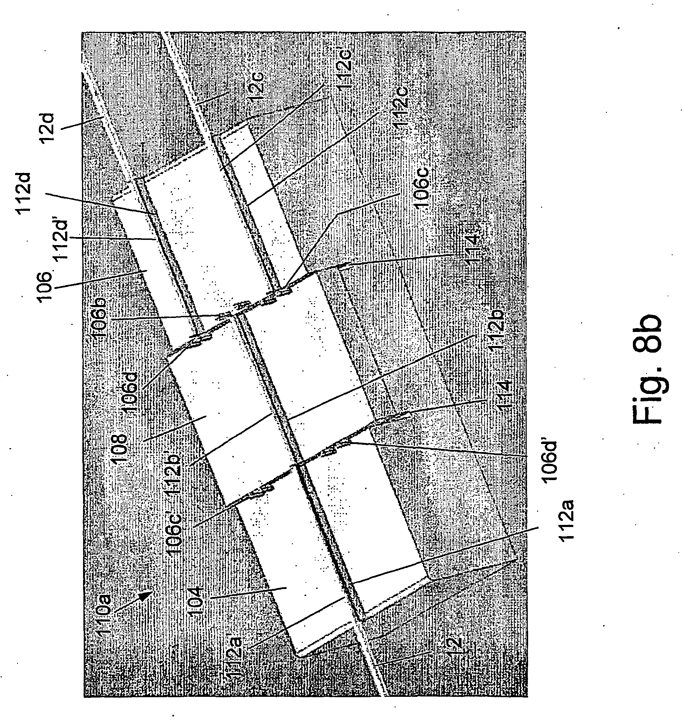

As seen in Fig. 8a, mobile platforms (16a), (16b) travel along cable line (12) to transfer platform (110a) and (110b) respectively. Fig. 8b shows transfer platform (110a) of Fig. 8a, enlarged and detailed, comprising fixed end portions (104) and (106), and sliding central portion (108). Each portion (104), (106), (108) comprises at least one cable, and a rail for supporting the cable, as described herein below.

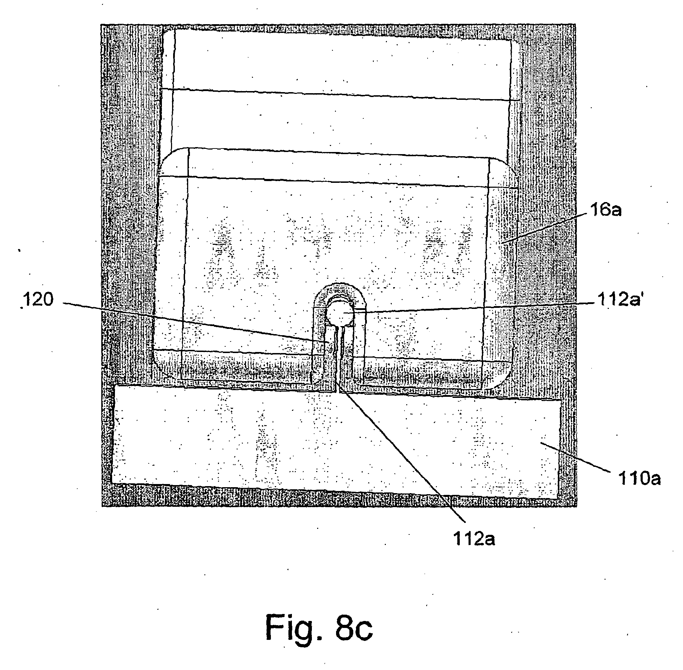

Mobile platform (16a) travels along cable (12) to cable (112a'), which is supported by end rail (112a) (as best seen in Fig. 8c). Fig. 8c additionally shows one embodiment of the traveling means of mobile platform (16a), wherein wheels (120), which are powered by a motor (not shown) rotate, thereby driving mobile platform (16a) along cable (12) (not seen in the figure). Referring to Fig. 8b, central rail (112b) is aligned with end rail (112a), thereby allowing mobile platform (16a) to continue to travel along cable (112') until reaching stoppers (106b). Cable lines (12c) and (12d) continue from cables (112c') and (112d'), which are supported by end rails (112c) and (112d), respectively. Sliding central portion (108) is shiftable transversely along grooves (114) to align central rail (112b) with either end rail (112c) or (112d), depending on which cable line (12c) or (12d) is supporting the other mobile platform (16b), as described below. In other words, for instance, if cable line (12c) is supporting mobile platform (16b), central rail (112b) will be aligned with cable line (12d). Mobile platform (16a) continues to travel along cable (112c') or (112d'), to cable line (12c) or (12d), accordingly.

Simultaneously, or separately, mobile platform (16b) travels onto fixed end portion (106) of transfer platform (110a) by traveling along cable line (12c) or (12d), each of which continues to cable (112c') or (112d'), respectively. Mobile platform (16b) continues to travel until it reaches stoppers (106c) or (106d). When mobile platform (16a) is not situated on transfer platform (110a), sliding central portion (108) can be shifted to align central rail (112b) with end rail (112c) or (112d), thereby allowing mobile platform (16b) to continue traveling along cable (112b') until reaching stoppers (106c') or (106d'). Sliding central portion can then be shifted to align central rail (112b) with end rail (112a), thereby allowing mobile platform (16b) to continue traveling to cable (12).

Transfer platform (110b), although not shown in the figures, is essentially the mirror image of transfer platform (110a), and performs the same operations as described above, for transferring mobile platform (16b) from cable line (12) to end rails (112c) or (112d) accordingly, and for transferring mobile platform (16a) from one of end rails (112c) or (112d) to cable line (12).

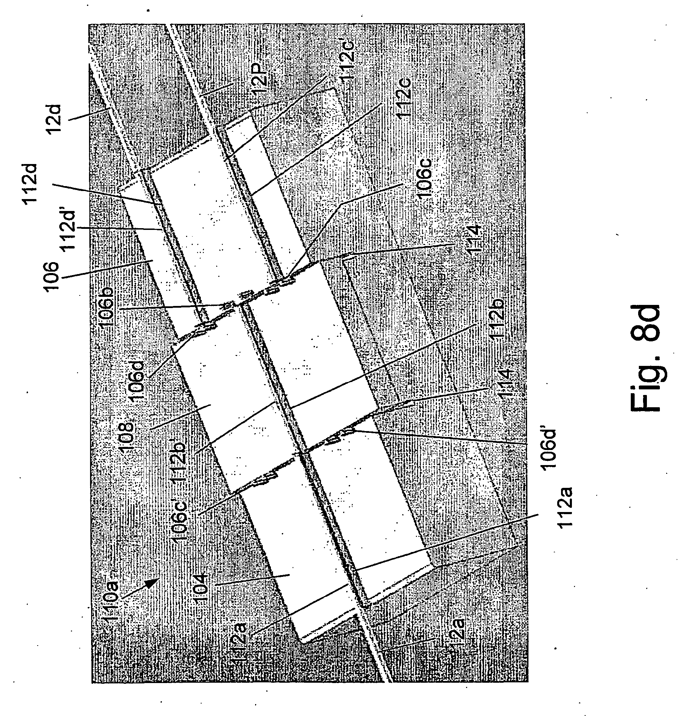

In an alternative arrangement, only one transfer platform (110a) or (110b) may be provided in order to allow mobile platforms to travel in different directions along the same cable line. In this case, mobile platforms (16a) and (16b) travel to fixed end portions (104) and (106) respectively. While mobile platform (16b) is situated on cable (12d) or cable (112d'), mobile platform (16a) travels to cable line (12c) according to the operations as described above. Fig. 8d shows cable line (12p), which, although not shown in the figure, extends from transfer platform (110a), preferably at a distance away from cable line (12d), and terminates at a supporting post (not shown). Mobile platform (16a) is temporarily parked on cable line (12p) while mobile platform (16b) is transferred to cable (12), or, at least to fixed end portion (104). Mobile platform (16a) can then travel back to end fixed portion (106), and continue to sliding central portion (108), and then to end rail (12d), according to the operations ad described above.

Depending on the nature and length of the highway (10) that is under surveillance, as well as the number, type and speed of the mobile platforms, a plurality of transfer systems (100) may be provided along the highway (10) at predetermined distances from each other.

Additionally, it should be noted that the process as described above may take place while airplane is in a landing position on mobile platform, or airborne. When landed, the width of the transfer platform (110a) is wide enough to accommodate both airplane (65a) and airplane (65b).

For all embodiments, a control station (not shown in figures) is provided for receiving and processing data from and transferring data to camera (14). In particular, the control station is capable of controlling the movement of camera (14), including the angle at which the lens is positioned relative to the ground, as well as the position of other movable components. The control station additionally controls the movement and operation of other movable components of the present invention, including mobile platform (16), airplane (65), motor (49), rigid shaft members (52a), (52b), etc. The control station may be remotely located, or situated in proximity to cable line (12). Additionally, the control system may be mobile or stationary. Additionally, the mechanical connector of all embodiments provides a transfer means for transferring control signals, power, and data between camera (14) and the control station.

The control station typically comprises at least a computer having an input device for inputting data and/or instructions required to be transferred to the above mentioned movable components. Information may be transferred over a wire/cable, or wirelessly. The control station preferably additionally comprises an output device such as a display monitor for indicating relevant data regarding the movable components. The display monitor preferably visually indicates at least the position of airplane (65) with respect to other components of the surveillance system of the present invention, as well as with respect to the surroundings.

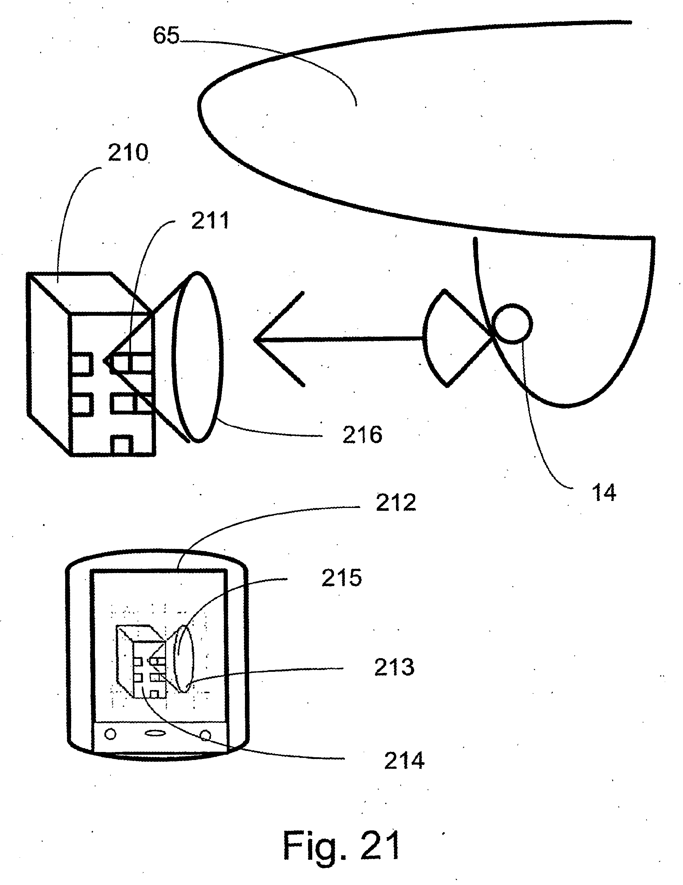

Fig. 21 schematically illustrates an embodiment where the control station comprises a mobile device for controlling the camera to provide images from a desired aspect and zoom. In this example, the control station may comprise a handheld Personal Digital Assistant (PDA), which comprises all of the necessary features for controlling the movable components of the present invention, for instance, controlling the focus of the camera and the camera angle with respect to the forbidden movement.

Since the path or road along which the forbidden movement is detected is predetermined, the control station preferably displays a detailed three dimensional image of the topography of the path or of the object of interest 210, which is a building with windows. Thus, a particular location or scene (In this example, a window 211 may be previewed in three dimensions, for instance by the PDA 212, prior to the camera reaching the location. The person who wishes to obtain the desired view can define the desires zoom and aspect of view by using a graphical representation, such as a virtual 3-D cone 213 with respect to an image 214 of building 210. The size of base 215 of cone 213 is graphically controllable and defines the required zoom. The vertex of cone 213 points on the image of window 211. The desired 3-D orientation of cone 213 around its vertex is graphically controllable, as well, and defines the required aspect of view. The virtual cone 213 is then transmitted and translated to an enlarged virtual cone 216, which corresponds to the physical 3-D orientation of the arrival path of airplane 65. Thus, the person can use the graphical capability of the PDA 212 to fully predefine the desired 3-D arriving path of camera14.

Using a satellite system such as GPS, specific coordinates or alternatively a particular object 211 desired to be viewed are input to the input device of the control station and the airplane may be automatically directed to said coordinates or object using automatic pilot system and automatic stabilizing system (VTOL). The camera 14 attached to the airplane 65 may be oriented to view the desired object 211 accordingly, without further instruction from the control station.

When airplane (65) of the second embodiment is preparing to land on mobile platform (16), the display monitor of the control station preferably displays the preferred flight path to be used, in order to aide the user situated at the control station to guide airplane (65) to land safely on mobile platform (16). The flight path may be indicated by displaying virtual preferred boundaries on either side of airplane (65) as it appears on the monitor, leading to mobile platform (16), to prevent deviation from the preferred path during landing.

According to all embodiments of the present invention as described herein, it is understood that the mechanical connector creates a projection of the spatial distance between the camera and the mobile platform. In comparative examples the mobile connector, and in turn the projection, is fixed and is typically longer than the width of the surveillance road. Thus, the length of the projection is greater than or equal to the total distance of the projection of the spatial distance between the camera and the location of the forbidden movement, and of the projection of the spatial distance between the location of the forbidden movement and the mobile platform. In all embodiments of the invention the length of the projection is adjustable by altering the position of the camera by moving the mechanical connector and/or the secondary platform as desired.

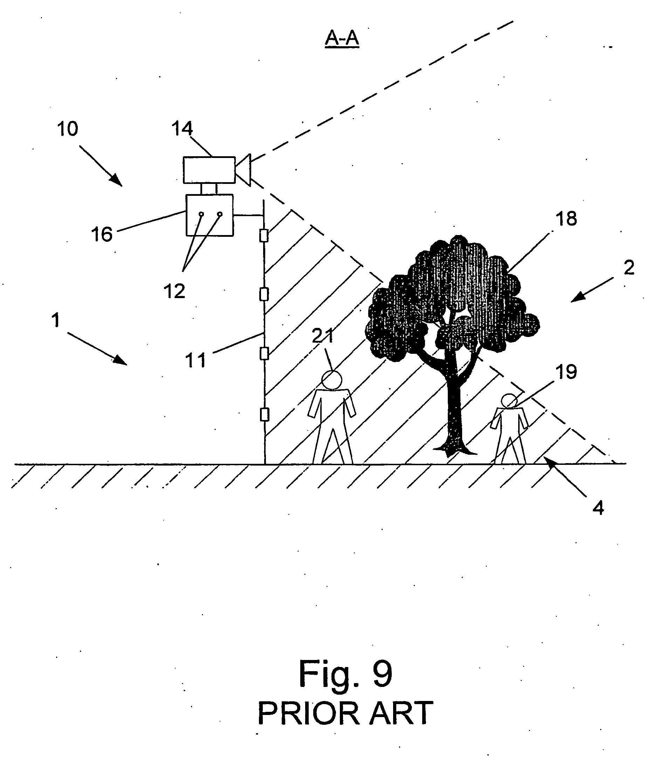

A application of the surveillance system is shown in Figs. 9 through 15 wherein it may be utilized as a surveillance system for detecting potential intruders. When attempting to enter a restricted area, an intruder typically hides within the dead space outside of the restricted area so as not to be detected by the surveillance system. By positioning a camera outside of the restricted area the amount of dead space available for an intruder to hide therein is reduced.

The examples embodiments and each of the components described herein below for this application comprise all of the features and advantages of the examples and embodiments as described herein above *mutatis mutandis*.

A schematic cross-sectional side view of a prior art surveillance system is shown in Fig. 9, wherein the area (2) outside of the fence (11) (also referred to herein as, "outer area") that encloses area (1) (also referred to herein as "restricted area"), is kept under surveillance. The surveillance system comprises mobile platform (16) and camera (14), which is mounted on mobile platform (16). Such a surveillance system may be utilized for relatively small areas such as for surveillance of the perimeter of a prison, or on a much larger scale, for instance, for patrolling the border between neighboring countries.

A potential intruder (19) may hide behind an object (18) such as a tree, or, a potential intruder (21) may stand in the dead space (4), marked by hatch lines, wherein neither location is within the camera's (14) visual range, and thereby remain undetected.

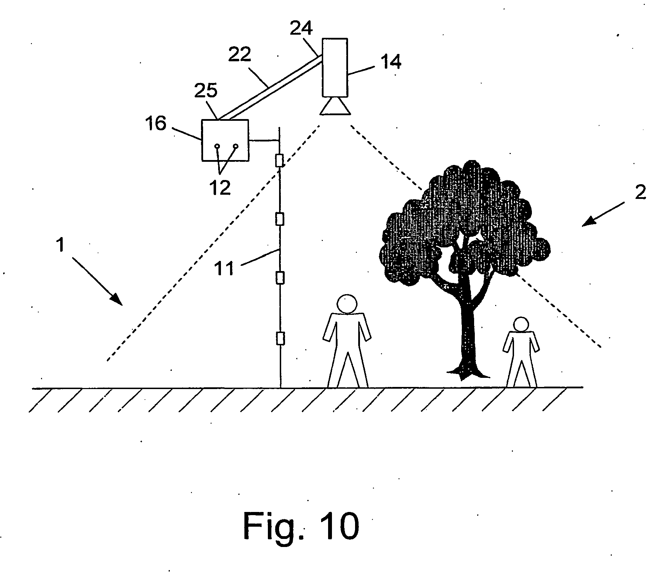

A further example of a surveillance system is shown in Fig. 10, comprising all the features of the prior art surveillance system of Fig. 1 and of the first example, however, camera (14) is situated above outer area (2). Camera (14) is connected to mobile platform (16) by a mechanical connection, which, in this example takes the form of a rigid shaft (22). Rigid shaft (22) comprises an elongated rod made of a single member, which is rigidly fixed, at one end (24), to camera (14), and, at the other end (25), to mobile platform (16). Rigid shaft (22) may be straight or curved, and is positioned such that one end (24) is elevated, preferably above the outer area (2). Hence, camera (14) can obtain an unobstructed view of a wide section of outer area (2) that surrounds fence (11).

The length and angle of shaft (22) with respect to mobile platform (16) is determined in connection with the elevation of mobile platform (16) off the ground and distance from fence (11), and the height of the fence. For applications where the system is utilized in patrolling territorial borders, camera (14) must only be situated in an area that is permissible according to international law.

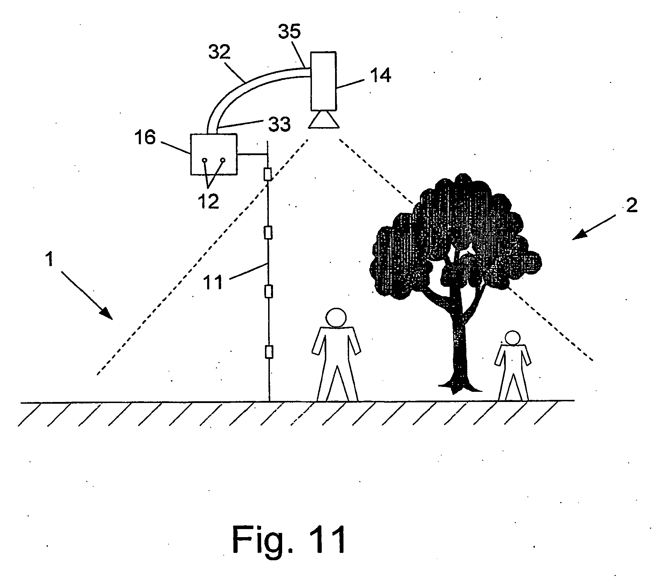

A further example of a surveillance system is shown schematically in Fig. 11, and comprises all of the elements of the example as described above, *mutatis mutandis,* with the following differences. In this example, the mechanical connection is provided in the form of a flexible bow (32) disposed such that the free end (35) of bow (32) is disposed over fence (11), in outer area (2).

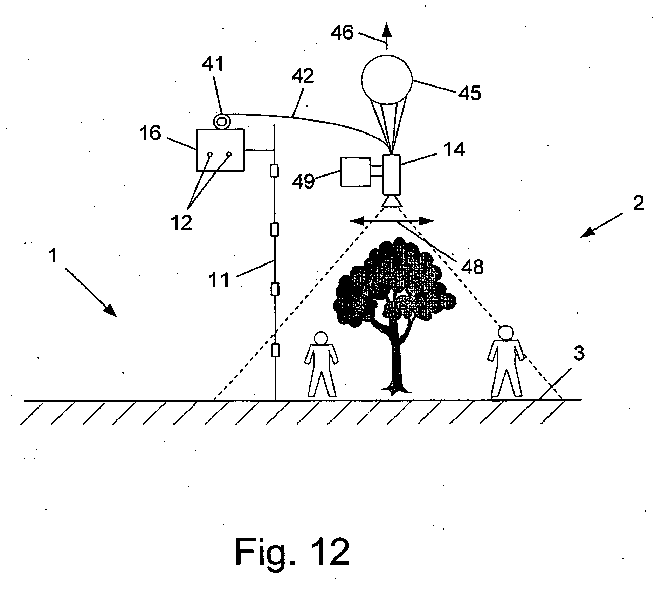

A further embodiment of the present invention is shown schematically in Fig. 12, and comprises all the elements of the example of Fig. 10 as described above, *mutatis mutandis,* with the following differences. In this embodiment, the mechanical connection of the surveillance system is provided in the form of a woundable flexible cable (42). Additionally, camera (14) is mounted on a secondary platform that creates or is acted upon by aerodynamic lift forces, such as a helium balloon (45), a kite (not shown), a parachute (not shown), or a glider (not shown). The secondary platform is connected to mobile platform (16) via cable (42).

By utilizing woundable flexible cable (42) the user is capable of positioning the camera (14) at locations at which he cannot position the camera (14) of the first and second embodiments. This allows observation of movement, which cannot be obtained from camera (14) of the first and second embodiments, which, in turn, minimizes the amount of dead space in outer area (2).

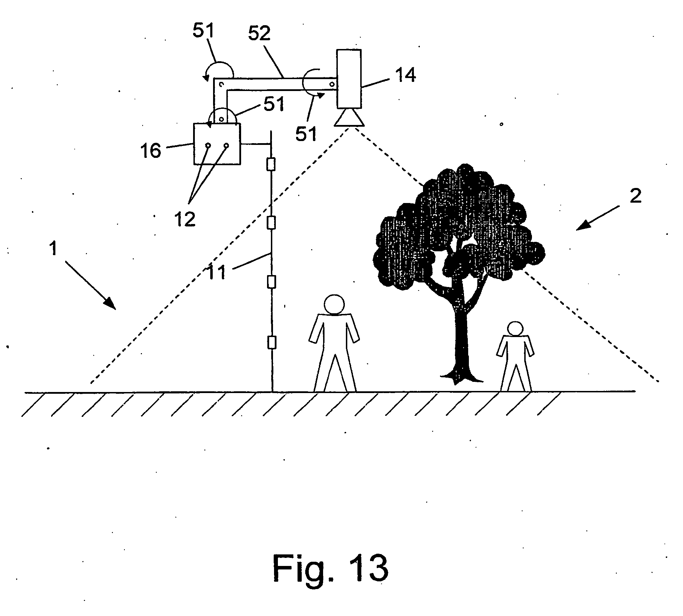

A further example of a surveillance system is shown schematically in Fig. 13, and comprises all the elements of the example of Fig. 10 as described above, *mutatis mutandis,* with the following differences. In this example, the mechanical connection of the surveillance system comprises a rigid shaft (52) having two members, each pivotally joined, at one end, to each other, and at their other end, to camera (14) and to mobile platform (16), respectively. Alternatively, more than two members may be present. The members pivotally rotate about respective axes, as indicated by arrows (51). At least one motor (not shown) controls the movement of each shaft (52) and the camera relative to each other.

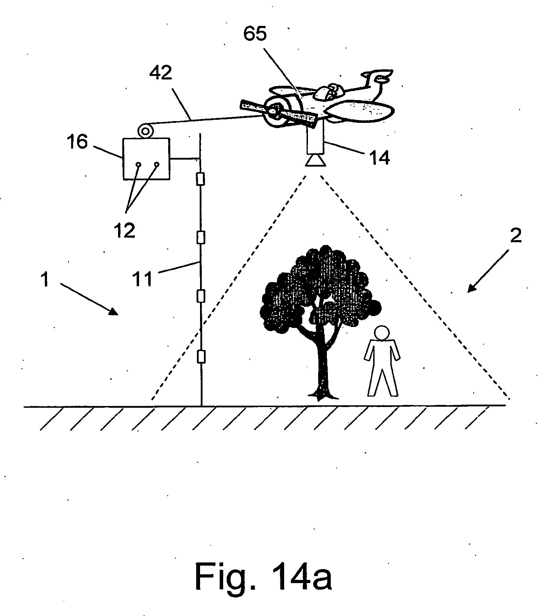

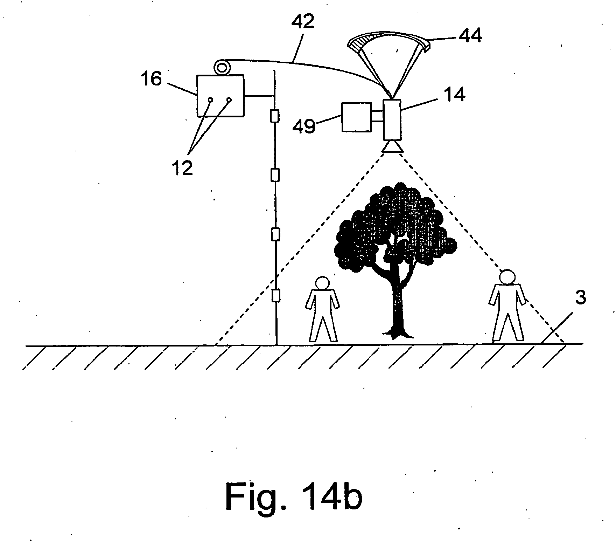

A further embodiment of the present invention is shown schematically in Figs. 14a and 14b, and comprises all the elements of the third embodiment of Fig. 12 as well as of the embodiment of Fig. 5a as described above, *mutatis mutandis,* with the following differences. In this embodiment, camera (14) is supported by a remotely controlled secondary platform, such as a remotely controlled airplane (65) (also referred to herein as a UAV (unmanned aerial vehicle), a CUAV (cable-UAV) or a TCUAV (train-cable-UAV). Airplane (65) is capable of traveling in all desired directions, but is nevertheless limited in the distance it may travel, at least by the length of woundable flexible cable (42). Although, as described above, the flight path of remotely controlled airplanes is generally not restricted in this manner, in the present invention, a restricted flight path is preferable in order to maintain flight relatively close to the area requiring surveillance along the border of restricted area (1). This enables the airplane (65), and particularly the camera, to be repositioned to different desired locations in a short amount of time. Alternatively, a remotely controlled helicopter (not shown), a motorized parachute (not shown), a paramotor glider (paraglider) (44) (see Fig. 14b) or a remotely controlled blimp or zeppelin type of aircraft (not shown) or any vertical take-off and landing (VTOL) aircraft may be utilized.

It should be noted that a VTOL aircraft is advantageous for use with the present invention, particularly during landing procedures, due to its hovering capabilities.

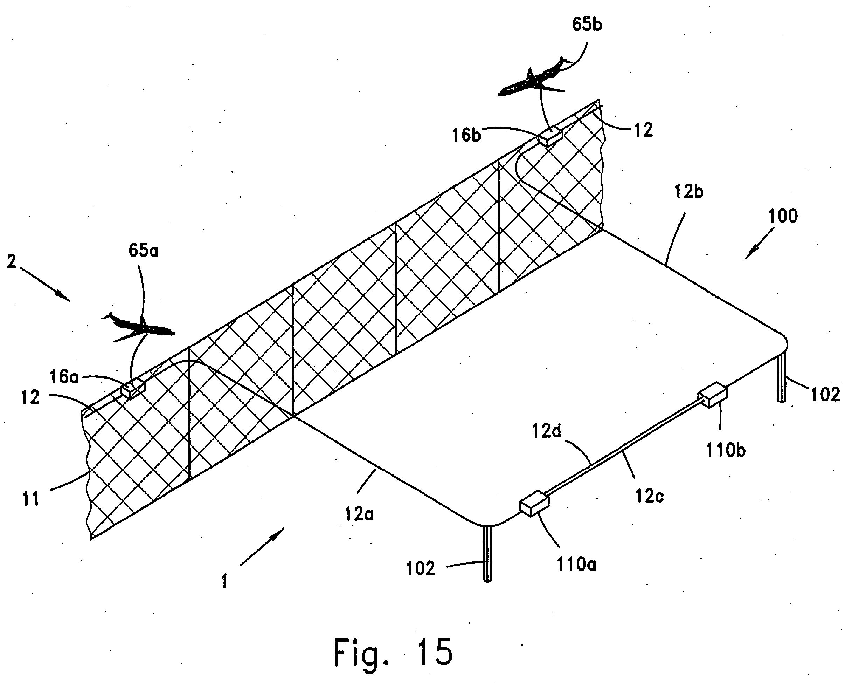

Fig. 15 shows transferring system (100) according to an embodiment of the present invention, situated within restricted area (1), when employed with the second example. Mobile platform (16a) travels along cable line (12) to cable line (12a), which is merely a continuation of cable line (12), but situated at a predetermined distance from fence (11), and generally not parallel thereto. Similarly, mobile platform (16b) travels to cable line (12b). Cable lines (12a) and (12b), which are supported by supports (102), continue to transfer platform (110a) and (110b), respectively. The method of interchanging positions of mobile platforms (16a) and (16b) along cable line (12) is performed according to the description of the embodiment of Fig 5a, *mutatis mutandis.*

Depending on the nature of the restricted area, and the length of the border that is under surveillance, as well as the number, type and speed of the mobile platforms, a plurality of transfer system (100) may be provided along the border at predetermined distances from each other.

The control station (not shown in the figures) as described herein above regarding the first example, may be remotely located, or situated in proximity to fence (11).

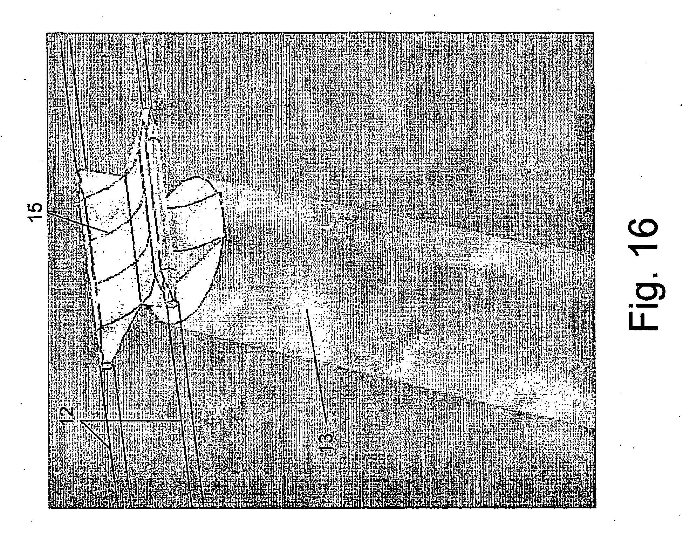

Referring to Figs. 16 through 19, preferred components of the embodiments of both Fig. 5a and Fig. 12 of the present invention are shown. As seen in Fig. 16, and applicable to all embodiments of the present invention, supporting post (13) comprises base unit (15) situated at the upper end thereof for supporting cable (12) running across a predetermined path.

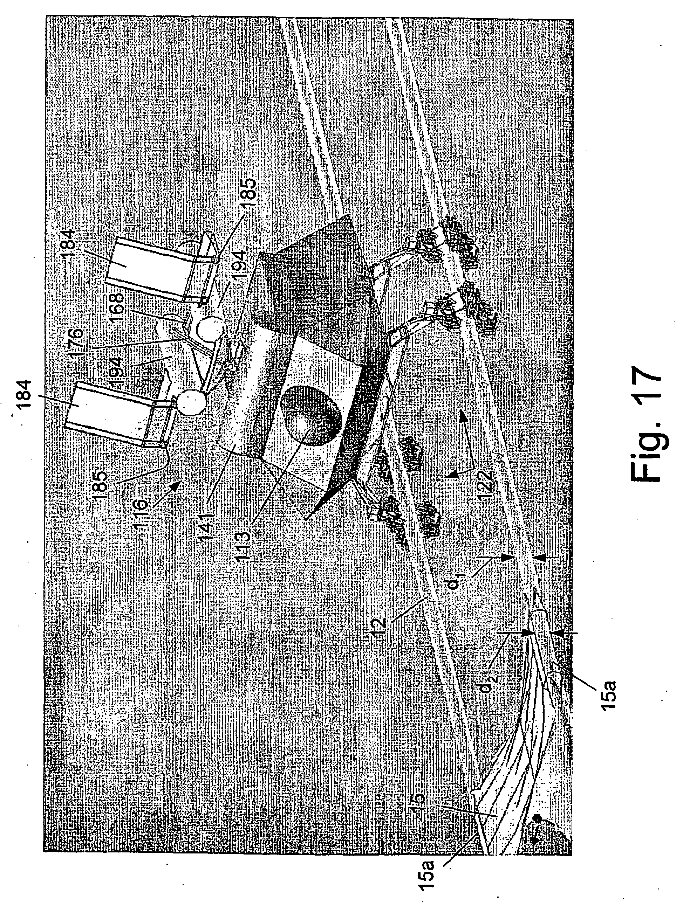

Fig. 17 shows mobile platform (116) riding along cable line (12). Mobile platform (116) comprises takeoff/landing pad (168) having longitudinal cushions (194) for absorbing the impact of airplane (not shown in the figure) during landing. Landing guide (176) joins pad (168) to the cable (not shown in the figure) extending from reel (141), for assisting in guiding the airplane along a desired path during landing. Arced members (184) receive the airplane wings and may be rotated about hinge (185) to secure the wings in place. In this embodiment, a camera (113) is positioned at the front portion of mobile platform (116).

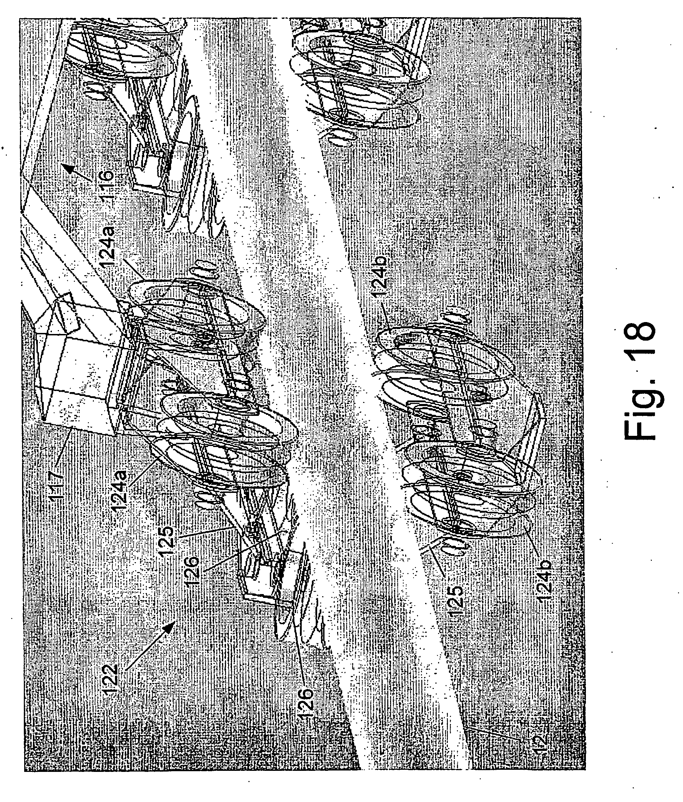

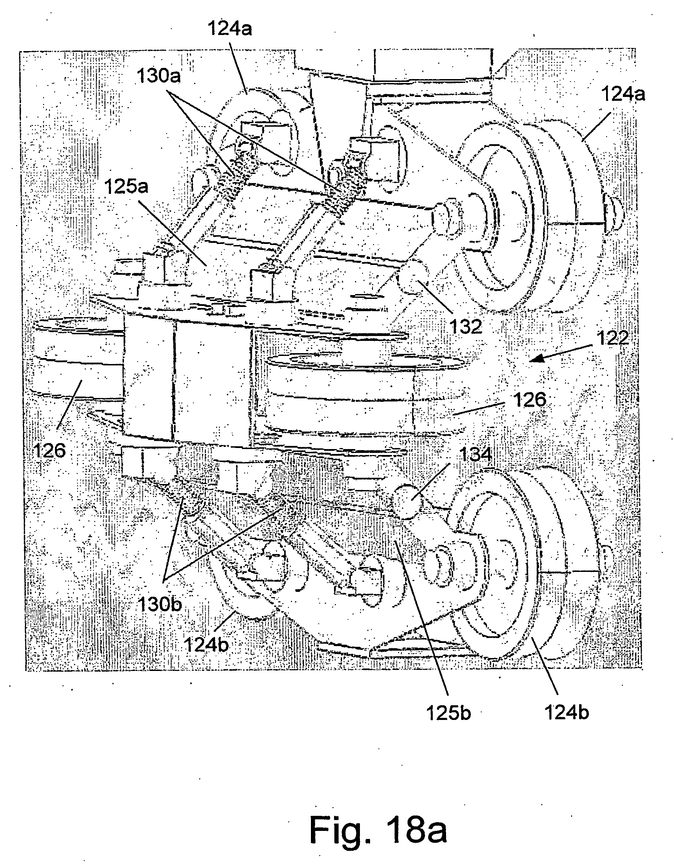

Referring to Fig. 17, but best seen in Fig. 18, mobile platform (116) travels along cable (12) via a system of wheel members (122) orthogonal to each other, and joined to the lower portion of mobile platform (116) by connecting member (117). When cable line (12) comprises two cables, as shown in this embodiment, at least one set of wheel members (122) is disposed around each cable, although at least two sets of wheel members (122) disposed around each cable is preferable. Fig. 18 shows an enlarged view of one set of orthogonal wheel members (122) in an enlarged view. Wheel members (122) comprise a pair of vertical upper wheels (124a), a pair of vertical lower wheels (124b) and a pair of horizontal wheels (126), wherein the vertical and horizontal orientation is with respect to the ground above which mobile platform (116) travels. Vertical wheels (124a) and (124b) are each joined to horizontal wheels (126) by one of rigid joining elements (125). Vertical upper wheels (124a) and vertical lower wheels (124b) roll along the cable from above and below. Horizontal wheels (126) are essentially orthogonal to vertical wheels (124a), (124b), and preferably comprise a smaller diameter than vertical wheels (124a), (124b), and do not contact cable (12).

As seen in Fig. 17, the cross-sectional diameter (d1) of cable (12) is typically smaller in size than the diameter (d2) of the portion (15a) of base unit (15) through which cable line (12) passes. Fig. 18a shows wheel members (122) from a back perspective view, removed from the cable. Spring mechanisms (130a), (130b) further join each of upper vertical wheels (124a) and lower vertical wheels (124b) to horizontal wheels (126). Upper and lower wheels (124a), (124b) travel along the cable at essentially 180 degrees. When upper and lower wheels (124a), (124b) reach portion (15a), each spring mechanism (130a), (130b) compresses. Horizontal wheels (126) rotate about upper and lower hinges (132), (134), thereby shifting toward portion (15a) until contact is made. Lower vertical wheels (124b) thereby separate from upper vertical wheels (124a) in order to allow wheel members (122) to travel along portion (15a) of base unit (15) (Fig. 17). After passing base unit (15), the spring mechanisms (130a),(130b) expand, causing horizontal wheels (126 vertical wheels (124a), (124b) to be pulled together to grip cable (12) Alternatively, cable (12) may have a smaller cross-sectional diameter that portion (15a). The spring mechanism may be controlled remotely, or it may be adjustable on its own. Alternatively, a telescopic member may expand and compress respectively to allow wheel members (122) to travel along cable (12) and base unit (15). Four spring members (130a), (130b) are shown, however it is understood that only one spring member is required to separate either lower vertical wheels (124a) from upper vertical wheels (124b).

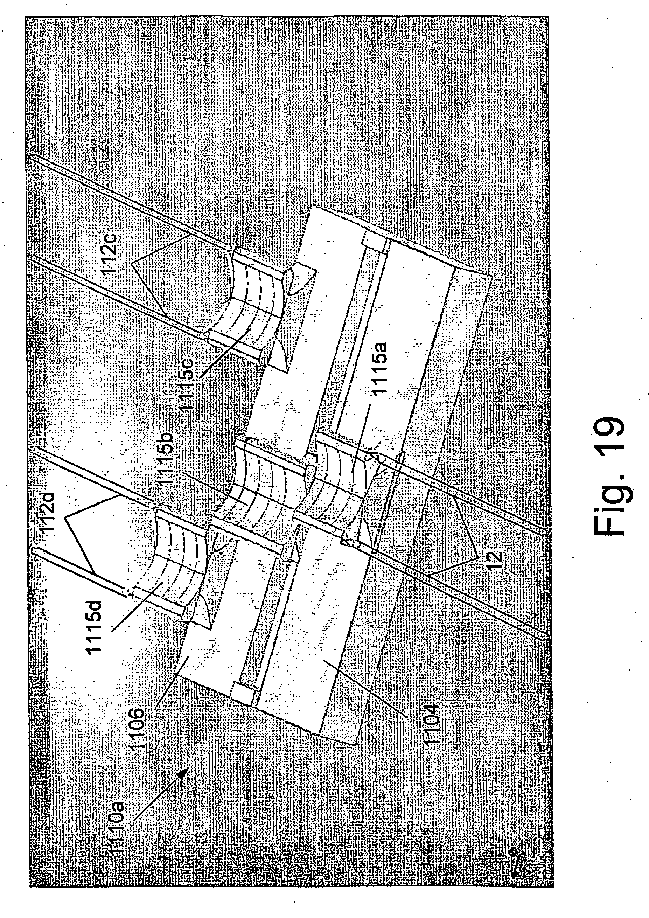

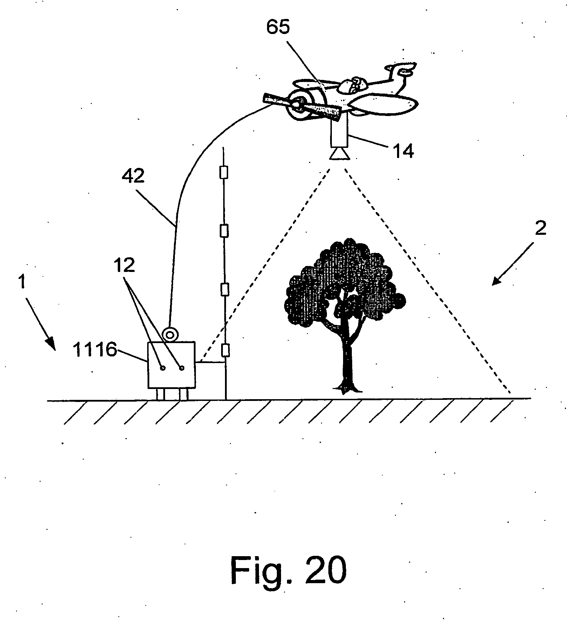

Fig. 19 shows a preferred embodiment of transfer platform (1110a) comprising all of the features of transfer platform (110a) as shown in Fig. 8b and described herein above, *mutatis mutandis*, with the following differences. Transfer platform (110a) comprises a first fixed end portion (1104) on which is situated fixed base unit (1115a) for receiving the mobile platform (not shown in the figure) from cable line (12). The mobile platform continues to the sliding central portion, which, in this embodiment comprises a sliding base unit (1115b). Base units (1115a)-(1115d) comprise stoppers (not shown) suitable situated at the ends thereof similar to the stoppers as seen in Fig.8d. The stoppers (not shown) are preferably capable of being raised and lowered in order to stop mobile platform (16) from traveling and allow mobile platform (16) from traveling respectively. Sliding base unit (1115b) shifts to align with wither fixed base unit (1115c) or (1115d), each of which is situated on fixed end portion (1106). Base units (1115a)-(1115d) comprise essentially the same elements of base unit (15) as described herein above and seen in Fig. 16. A further embodiment of the present invention is shown in Fig. 20 comprising all of the features of the embodiment of Fig.14a *mutatis mutandis,* with the following differences. Mobile platform (1116) of this embodiment comprises an Unmanned Ground Vehicle (UGV) which travels over the ground along cable line (12). UGV (1116) is powered as described above for mobile platform (16), and airplane (65) preferably receives electrical power passed through cable (42), as described herein above.

Preferably, although not necessarily, all of the motors utilized in the present invention are electrical motors, due to the lower wear and tear associated theirwith in contrast to mechanical motors.

Among the many advantages of the present invention over prior art stationary surveillance systems, as described herein above, the present invention provides the ability to substitute a broken or damaged item such as the camera, mobile platform and secondary platform, without requiring to physically replace the object. In prior art stationary surveillance systems, a broken or damaged object of the system along the surveillance path must be physically removed and replaced in order to restore the system to its optimal efficiency. According to the present invention, however, the mobile platform may be shifted along the path to allow for an alternate mobile platform to be located at the area of the broken object.

While in the foregoing description describes in detail only a few specific embodiments of the invention, it will be understood by those skilled in the art that the invention is not limited thereto and that other variations in form and details may be possible, for example, adding a device that is capable of capturing the UAV after fulfilling its mission, without departing from the scope of the invention herein disclosed.

## Claims

1. A surveillance system for detecting forbidden movement in any direction at one or more locations along a road, said system comprising:
a. one or more cameras for detecting said forbidden movement, said one or more cameras being in data communication with a control station;
b. one or more mobile platforms, each of which is movable along a desired path along said road; the path comprising at least one of a cable line and a rail;
c. a mechanical, connector for connecting at least one of said cameras to at least one of said mobile platforms, thereby creating a projection of the spatial distance between said camera and said mobile platform; and
d. a control station for receiving and processing data from and transferring data to said one or more cameras;
wherein the length of said projection is adjustable,
**characterized in that**, the at least one camera is mounted on a secondary platform that is an airborne mechanism capable of being kept airborne by creating or being acted upon by aerodynamic forces.

2. A surveillance system according to claim 1, wherein the secondary platform is capable of being remotely controlled and of independent motion, and is connected to the mobile platform by a windable cable.

3. A surveillance system according to claim 2, wherein the remotely controlled secondary platform is chosen from anyone of the group consisting of:
a. a remotely controlled helicopter;
b. a VTOL aircraft;
c. a motorized parachute;
d. a paraglider;
e. a remotely controlled blimp; and,
f. a remotely controlled airplane.

4. A surveillance system according to claim 1, wherein the secondary platform is one from the group consisting of:
a. a helium balloon;
b. a kite;
c. a parachute; and,
d. a glider;

5. A surveillance system according to anyone of claims 1-4, wherein the mobile platform further comprises a take off/landing mechanism for the secondary platform to land thereon and to take off therefrom.

6. A surveillance system according to claim 5, wherein the take off/landing mechanism comprises at least a pad and an extendible arm for connecting said pad to the mobile platform.

7. A surveillance system according to claim 6, wherein the take off/landing mechanism further comprises a system for guiding the secondary platform to the take off/landing mechanism, wherein said guiding system comprises:
a. a sensor comprising a transmitter and a receiver situated on said take off/landing mechanism; and,
b. a sensor comprising a receiver and a transmitter situated at said secondary platform;
wherein each of said transmitters is capable of transmitting at least one signal and each of said receivers is capable of receiving at least one signal, and wherein said guiding system interprets said signals to generate control signals to guide said secondary platform during flight and during landing procedures.

8. A surveillance system according to claim 5, wherein the take off/landing mechanism further comprises an extendible and foldable net for receiving the secondary platform during landing.

9. A surveillance system according to claim 5, wherein the take off/landing mechanism further comprises an expandable and foldable net for securing the secondary platform after landing.

10. A surveillance system according to claim 5, wherein the take off/landing mechanism further comprises a cushion for absorbing the impact of the secondary platform during landing.

11. A surveillance system according to claim 3, wherein the secondary platform is powered by electricity supplied from a remote electrical energy source and transferred to said secondary platform through the mechanical connector.

12. A surveillance system according to claim 3, wherein the secondary platform is powered by anyone of the group consisting of:
a. battery;
b. solar;
c. fuel cell; and,
d. gasoline.

13. A surveillance system according to claim 4, wherein the secondary platform further comprises at least one motor connected to propulsion mechanism, for causing said secondary platform to move or hover.

14. A surveillance system according to claim 1, wherein the mobile platform is driven by anyone of the group consisting of:
a. a gasoline motor;
b. an electric motor, wherein the electricity is conducted to the motor through the cable line or rail.

15. A surveillance system according to claim 5, wherein the secondary platform further comprises a banner attached thereto, having a public service announcement.

16. A surveillance system according to claim 5, wherein the mobile platform is towed along the path by the secondary platform.

17. A surveillance system according to claim 1, wherein said system further comprises a transferring system comprising at least one transfer platform for transferring at least one mobile platform from one portion of the path to another portion of the path, thereby enabling one of said platforms to pass another.

18. A surveillance system according to claim 17, wherein the transfer platform comprises:
a. a first end fixed portion comprising at least one cable supported by an end rail, for allowing at least one mobile platform to travel thereto and therefrom;
b. a second end fixed portion comprising at least one cable supported by an end rail, for allowing at least one mobile platform to travel thereto and therefrom; and,
c. a sliding central portion comprising at least one cable supported by a central rail, wherein said central rail can be aligned with either one of said end rails.

19. A surveillance system according to claim 3, wherein the secondary platform further comprises a reel for paying out and winding in the cable.

20. A surveillance system according to claim 19, wherein the cable comprises a spring mechanism at the end that is connected to the reel.

21. A surveillance system according to claim 19, wherein the reel comprises a sensor for preventing the cable from being fully paid out.

22. A surveillance system according to claim 19, wherein the reel comprises a sensor for detecting the distance between the mobile platform and the secondary platform.

23. A surveillance system according to claim 3, further comprising a mechanism for disconnecting the cable from the secondary platform.

24. A surveillance system according to claim 3, wherein the secondary platform comprises a stabilization system for stabilizing the movement of said secondary platform.

25. A surveillance system according to claim 3, wherein the secondary platform comprises wings that are foldable or retractable.

26. A surveillance system according to claim 1, wherein the control station comprises a computer comprising an input device and an output device.

27. A surveillance system according to claim 26, wherein the control station comprises a PDA.

28. A surveillance system according to claim 26, wherein the control station controls the movement of the mobile platform, the secondary platform and the camera.

29. A surveillance system according to claim 1, wherein the mobile platform is movable along the cable or rail by a system of wheel members comprising upper vertical wheels, lower vertical wheels and horizontal wheels.

30. A surveillance system according to claim 29, wherein the lower vertical wheels are seperable from said upper vertical wheels by a spring mechanism.

31. A surveillance system according to claim 1, further comprising an outer area, outside of a restricted area, wherein at least one mobile platform is situated in said restricted area, and said camera is capable of being positioned at least in said outer area in order to view at least a portion of said outer area.

32. A method for detecting forbidden movement in any direction at one or more locations along a road, said method comprising:
a. providing a surveillance system comprising:
1). one or more cameras for detecting said forbidden movement, said one or more cameras being in data communication with a control station;
2). one or more mobile platforms, each of which is movable along a desired path along said road, the path comprising at least one of a cable line and a rail;
3). a secondary platform to which at least one of said cameras is connected, wherein the secondary platform is an airborne mechanism capable of being made and kept airborne by creating or being acted upon by aerodynamic forces
4). a windable cable for connecting said secondary platform to one of said mobile platforms; and,
5). a control station for receiving and processing data from and transferring data to said one or more cameras, and for controlling the movement of said mobile platform, said secondary platform and said camera;
b. providing a power source for transferring power to said mobile platform and said secondary platform;
c. transferring power to said secondary platform through said cable;
d. optionally directing said mobile platform to travel along said path;
e. detecting forbidden movement along said road by said camera; and
f. transferring data from said camera to said control station.

33. A method according to claim 32, wherein said secondary platform is capable of independent motion.

34. A method according to claim 33, comprising remotely controlling the secondary platform which is chosen from anyone of the group consisting of:
a. a remotely controlled helicopter;
b. a VTOL aircraft;
c. a motorized parachute;
d. a paraglider;
e. a remotely controlled blimp; and,
f. a remotely controlled airplane

## Patentansprüche

1. Überwachungssystem zum Erfassen einer verbotenen Bewegung in einer beliebigen Richtung an einer oder mehreren Stellen entlang einer Straße, wobei das System umfasst:
a. eine oder mehrere Kameras zum Erfassen der verbotenen Bewegung, wobei sich die eine oder die mehreren Kameras in einer Datenverbindung mit einer Kontrollstation befinden;
b. eine oder mehrere mobile Plattformen, wobei jede davon entlang einem gewünschtem Pfad entlang der Straße beweglich ist; wobei der Pfad eine Kabelleitung und/oder eine Schiene umfasst;
c. einen mechanischen Verbinder zum Verbinden von mindestens einer der Kameras mit mindestens einer der mobilen Plattformen, wodurch ein Überstand des räumlichen Abstandes zwischen der Kamera und der mobilen Plattform erzeugt wird; und
d. eine Kontrollstation zum Empfangen und Verarbeiten von Daten von und zum Übertragen von Daten zu der einen oder den mehreren Kameras;
wobei die Länge des Überstands einstellbar ist,
**dadurch gekennzeichnet, dass** mindestens eine Kamera an einer Sekundärplattform angebracht ist, welche ein Flugmechanismus ist, welcher in der Lage ist, in der Luft gehalten zu werden, indem aerodynamische Kräfte erzeugt werden oder darauf ausgeübt werden.

2. Überwachungssystem nach Anspruch 1, wobei die Sekundärplattform in der Lage ist, ferngesteuert, und unabhängig bewegt zu werden, und über ein wickelbares Kabel mit der mobilen Plattform verbunden ist.

3. Überwachungssystem nach Anspruch 2, wobei die ferngesteuerte Sekundärplattform beliebig aus der Gruppe ausgewählt wird, welche besteht aus:
a. einem ferngesteuerten Hubschrauber;
b. einem VTOL Fluggerät;
c. einem motorisierten Fallschirm;
d. einem Gleitschirm;
e. einem ferngesteuerten Luftschiff; und
f. einem ferngesteuerten Flugzeug.

4. Überwachungssystem nach Anspruch 1, wobei die Sekundärplattform eine aus der Gruppe ist, welche besteht aus:
a. einem Heliumballon;
b. einem Drachen;
c. einem Fallschirm; und
d. einem Gleiter.

5. Überwachungssystem nach einem der Ansprüche 1 bis 4, wobei die mobile Plattform ferner einen Start-/ Landemechanismus für die Sekundärplattform zum Landen darauf und zum Starten davon umfasst.

6. Überwachungssystem nach Anspruch 5, wobei der Start-/ Landemechanismus mindestens ein Feld und einen ausfahrbaren Arm zum Verbinden des Feldes mit der mobilen Plattform umfasst.

7. Überwachungssystem nach Anspruch 6, wobei der Start-/ Landemechanismus ferner ein System zum Führen der Sekundärplattform zu dem Start-/ Landemechanismus umfasst, wobei das Führungssystem umfasst:
a. einen Sensor, welcher einen Sender und einen Empfänger umfasst, welche an dem Start-/ Landemechanismus angeordnet sind; und
b. einen Sensor, welcher einen Empfänger und einen Sender umfasst, welche an der Sekundärplattform angeordnet sind;
wobei jeder der Sender in der Lage ist, mindestens ein Signal zu senden, und jeder der Empfänger in der Lage ist, mindestens ein Signal zu empfangen, und wobei das Führungssystem die Signale auswertet, um Steuersignale zu erzeugen, um die Sekundärplattform während eines Fluges und während Landeprozeduren zu steuern.

8. Überwachungssystem nach Anspruch 5, wobei der Start-/ Landemechanismus ferner ein ausfahrbares und faltbares Netz zum Aufnehmen der Sekundärplattform während eines Landens umfasst.

9. Überwachungssystem nach Anspruch 5, wobei der Start-/ Landemechanismus ferner ein ausdehnbares und faltbares Netz zum Sichern der Sekundärplattform nach einem Landen umfasst.

10. Überwachungssystem nach Anspruch 5, wobei der Start-/ Landemechanismus ferner ein Polster zum Absorbieren des Aufpralls der Sekundärplattform während eines Landens umfasst.

11. Überwachungssystem nach Anspruch 3, wobei die Sekundärplattform von Elektrizität angetrieben wird, welche von einer entfernten elektrischen Energiequelle zugeführt wird und zu der Sekundärplattform durch den mechanischen Verbinder übertragen wird.

12. Überwachungssystem nach Anspruch 3, wobei die Sekundärplattform angetrieben wird von irgendetwas aus der Gruppe, welche besteht aus:
a. Batterien;
b. Solar;
c. Kraftstoffzelle; und
d. Benzin.

13. Überwachungssystem nach Anspruch 4, wobei die Sekundärplattform ferner mindestens einen mit einem Antriebsmechanismus verbundenen Motor umfasst, um zu bewirken, dass sich die Sekundärplattform bewegt oder schwebt.

14. Überwachungssystem nach Anspruch 1, wobei die mobile Plattform angetrieben wird von einem beliebigen aus der Gruppe bestehend aus:
a. einem Benzinmotor;
b. einem Elektromotor, wobei die Elektrizität durch die Kabelleitung oder die Schiene zu dem Motor geleitet wird.

15. Überwachungssystem nach Anspruch 5, wobei die Sekundärplattform ferner ein daran angebrachtes Banner umfasst, welches eine Veröffentlichung eines öffentlichen Dienstes aufweist.

16. Überwachungssystem nach Anspruch 5, wobei die mobile Plattform entlang dem Pfad von der Sekundärplattform geschleppt wird.

17. Überwachungssystem nach Anspruch 1, wobei das System ferner ein Übertragungssystem umfasst, welches mindestens eine Übertragungsplattform zum Übertragen von mindestens einer mobilen Plattform von einem Abschnitt des Pfades zu einem anderen Abschnitt des Pfades umfasst, wodurch einer der Plattformen ermöglicht wird, eine andere zu passieren.

18. Überwachungssystem nach Anspruch 17, wobei die Übertragungsplattform umfasst:
a. einen ersten festen Endabschnitt, welcher mindestens ein von einer Endschiene gehaltenes Kabel umfasst, um mindestens einer mobilen Plattform zu ermöglichen, sich dorthin und davon zu bewegen;
b. einen zweiten festen Endabschnitt, welcher mindestens ein von einer Endschiene gehaltenes Kabel umfasst, um mindestens einer mobilen Plattform zu ermöglichen, sich dorthin und davon zu bewegen; und
c. einen mittleren Schiebeabschnitt, welcher mindestens ein von einer mittleren Schiene gehaltenes Kabel umfasst, wobei die mittlere Schiene zu einer von den Endschienen ausgerichtet sein kann.

19. Überwachungssystem nach Anspruch 3, wobei die Sekundärplattform ferner eine Spule zum Abrollen und Aufwickeln des Kabels umfasst.

20. Überwachungssystem nach Anspruch 19, wobei das Kabel einen Federmechanismus an dem Ende umfasst, welches mit der Spule verbunden ist.

21. Überwachungssystem nach Anspruch 19, wobei die Spule einen Sensor umfasst, um zu verhindern, dass das Kabel vollständig abgerollt wird.

22. Überwachungssystem nach Anspruch 19, wobei die Spule einen Sensor zum Erfassen eines Abstands zwischen der mobilen Plattform und der Sekundärplattform umfasst.

23. Überwachungssystem nach Anspruch 3, ferner umfassend einen Mechanismus zum Entkoppeln des Kabels von der Sekundärplattform.

24. Überwachungssystem nach Anspruch 3, wobei die Sekundärplattform ein Stabilisierungssystem zum Stabilisieren der Bewegung der Sekundärplattform umfasst.

25. Überwachungssystem nach Anspruch 3, wobei die Sekundärplattform Flügel umfasst, welche faltbar oder zurückziehbar sind.

26. Überwachungssystem nach Anspruch 1, wobei die Kontrollstation einen Computer umfasst, welcher eine Eingabevorrichtung und eine Ausgabevorrichtung umfasst.

27. Überwachungssystem nach Anspruch 26, wobei die Kontrollstation einen PDA umfasst.

28. Überwachungssystem nach Anspruch 26, wobei die Kontrollstation die Bewegung der mobilen Plattform, der Sekundärplattform und der Kamera steuert.

29. Überwachungssystem nach Anspruch 1, wobei die mobile Plattform entlang dem Kabel oder der Schiene durch ein System von Radelementen beweglich ist, welches obere vertikale Räder, untere vertikale Räder und horizontale Räder umfasst.

30. Überwachungssystem nach Anspruch 29, wobei die unteren vertikalen Räder durch einen Federmechanismus trennbar von den oberen vertikalen Rädern sind.

31. Überwachungssystem nach Anspruch 1, ferner umfassend einen äußeren Bereich außerhalb eines begrenzten Bereichs, wobei mindestens eine mobile Plattform in dem begrenzten Bereich angeordnet ist, und wobei die Kamera in der Lage ist, zumindest in dem äußeren Bereich angeordnet zu werden, um mindestens einen Abschnitt des äußeren Bereichs zu betrachten.

32. Verfahren zum Erfassen einer verbotenen Bewegung in einer beliebigen Richtung an einer oder mehreren Stellen entlang einer Straße, wobei das Verfahren umfasst:
a. Bereitstellen eines Überwachungssystems, welches umfasst:
1) eine oder mehrere Kameras zum Erfassen der verbotenen Bewegung, wobei sich die eine oder die mehreren Kameras in einer Datenverbindung mit einer Kontrollstation befinden;
2) eine oder mehrere Plattformen, wobei jede davon entlang eines gewünschten Pfades entlang der Straße beweglich ist, wobei der Pfad eine Kabelleitung und/oder eine Schiene umfasst;
3) eine Sekundärplattform, mit welcher mindestens eine der Kameras verbunden ist, wobei die Sekundärplattform ein Flugmechanismus ist, welcher in der Lage ist, in die Luft gebracht zu werden oder in der Luft gehalten zu werden, indem aerodynamische Kräfte erzeugt werden oder darauf ausgeübt werden;
4) ein wickelbares Kabel zum Verbinden der Sekundärplattform mit einer der mobilen Plattformen; und
5) eine Kontrollstation zum Empfangen und Verarbeiten von Daten von und zum Übertragen von Daten zu der einen oder den mehreren Kameras und zum Steuern der Bewegung der mobilen Plattform, der Sekundärplattform und der Kamera;
b. Bereitstellen einer Energiequelle zum Übertragen von Energie zu der mobilen Plattform und der Sekundärplattform;
c. Übertragen von Energie zu der Sekundärplattform durch das Kabel;
d. optionales Führen der mobilen Plattform, um sich entlang dem Pfad zu bewegen;
e. Erfassen einer verbotenen Bewegung entlang der Straße mit der Kamera; und
f. Übertragen von Daten von der Kamera zu der Kontrollstation.

33. Verfahren nach Anspruch 32, wobei die Sekundärplattform in der Lage ist, sich unabhängig zu bewegen.

34. Verfahren nach Anspruch 33, umfassend ein Fernsteuern der Sekundärplattform, welche ausgewählt wird aus einer beliebigen aus der Gruppe bestehend aus:
a. einem ferngesteuerten Hubschrauber;
b. einem VTOL Fluggerät;
c. einem motorisierten Fallschirm;
d. einem Gleitschirm;
e. einem ferngesteuerten Luftschiff; und
f. einem ferngesteuerten Flugzeug.

## Revendications

1. Système de surveillance pour détecter un mouvement interdit dans n'importe quelle direction à un ou plusieurs emplacements le long d'une route, ledit système comprenant :
a. une ou plusieurs caméras pour détecter ledit mouvement interdit, lesdites une ou plusieurs caméras étant en communication de données avec une station de commande ;
b. une ou plusieurs plateformes mobiles, chacune d'elles pouvant être déplacée le long d'un trajet souhaité le long de ladite route ; le trajet comprenant au moins un parmi une ligne de câble et un rail ;
c. un raccord mécanique pour relier au moins l'une desdites caméras à au moins l'une desdites plateformes mobiles, créant de ce fait une projection de la distance spatiale entre ladite caméra et ladite plateforme mobile ; et
d. une station de commande pour recevoir et traiter des données provenant desdites une ou plusieurs caméras et leur transférer des données ;
dans lequel la longueur de ladite projection est ajustable,
**caractérisé en ce que** la au moins une caméra est montée sur une plateforme auxiliaire qui est un mécanisme aérien qui peut être maintenu en l'air en créant des forces aérodynamiques ou en y étant soumis.

2. Système de surveillance selon la revendication 1, dans lequel la plateforme auxiliaire peut être commandée à distance et se déplacer de manière indépendante, et est reliée à la plateforme mobile par un câble pouvant être enroulé.

3. Système de surveillance selon la revendication 2, dans lequel la plateforme auxiliaire commandée à distance est choisie parmi n'importe quel élément du groupe constitué de :
a. un hélicoptère commandé à distance ;
b. un avion à décollage et atterrissage verticaux ;
c. un parachute motorisé ;
d. un parapente ;
e. un dirigeable souple commandé à distance ; et
f. un avion commandé à distance.

4. Système de surveillance selon la revendication 1, dans lequel la plateforme auxiliaire est un élément du groupe constitué de :
a. un ballon à l'hélium ;
b. un cerf-volant ;
c. un parachute ; et
d. un planeur.

5. Système de surveillance selon l'une quelconque des revendications 1 à 4, dans lequel la plateforme mobile comprend en outre un mécanisme de décollage/atterrissage pour l'atterrissage de la plateforme auxiliaire et son décollage sur et à partir de celui-ci.

6. Système de surveillance selon la revendication 5, dans lequel le mécanisme de décollage/atterrissage comprend au moins une aire et un bras extensible pour relier ladite aire à la plateforme mobile.

7. Système de surveillance selon la revendication 6, dans lequel le mécanisme de décollage/atterrissage comprend en outre un système pour guider la plateforme auxiliaire vers le mécanisme de décollage/atterrissage, dans lequel ledit système de guidage comprend :
a. un capteur comprenant un émetteur et un récepteur situé sur ledit mécanisme de décollage/atterrissage ; et
b. un capteur comprenant un récepteur et un émetteur situé au niveau de ladite plateforme auxiliaire ;
dans lequel chacun desdits émetteurs est capable d'émettre au moins un signal et chacun desdits récepteurs est capable de recevoir au moins un signal, et dans lequel ledit système de guidage interprète lesdits signaux pour générer des signaux de commande pour guider ladite plateforme auxiliaire pendant le vol et pendant les procédures d'atterrissage.

8. Système de surveillance selon la revendication 5, dans lequel le mécanisme de décollage/atterrissage comprend en outre un filet extensible et pliable pour recevoir la plateforme auxiliaire pendant l'atterrissage.

9. Système de surveillance selon la revendication 5, dans lequel le mécanisme de décollage/atterrissage comprend en outre un filet extensible et pliable pour fixer la plateforme auxiliaire après l'atterrissage.

10. Système de surveillance selon la revendication 5, dans lequel le mécanisme de décollage/atterrissage comprend en outre un coussin pour absorber le choc de la plateforme auxiliaire pendant l'atterrissage.

11. Système de surveillance selon la revendication 3, dans lequel la plateforme auxiliaire est alimentée par de l'électricité fournie par une source d'énergie électrique à distance et transférée à ladite plateforme auxiliaire par l'intermédiaire du raccord mécanique.

12. Système de surveillance selon la revendication 3, dans lequel la plateforme auxiliaire est alimentée par l'un quelconque des éléments du groupe constitué de :
a. une batterie ;
b. l'énergie solaire ;
c. une pile à combustible ; et
d. l'essence.

13. Système de surveillance selon la revendication 4, dans lequel la plateforme auxiliaire comprend en outre au moins un moteur relié à un mécanisme de propulsion, pour amener ladite plateforme auxiliaire à se déplacer ou à être en vol stationnaire.

14. Système de surveillance selon la revendication 1, dans lequel la plateforme mobile est entraînée par l'un quelconque des éléments du groupe constitué de :
a. un moteur à essence ;
b. un moteur électrique, dans lequel l'électricité est conduite vers le moteur par l'intermédiaire de la ligne de câble ou du rail.

15. Système de surveillance selon la revendication 5, dans lequel la plateforme auxiliaire comprend en outre une bannière fixée à celle-ci, comportant un message d'intérêt public.

16. Système de surveillance selon la revendication 5, dans lequel la plateforme mobile est traînée le long du trajet par la plateforme auxiliaire.

17. Système de surveillance selon la revendication 1, dans lequel ledit système comprend en outre un système de transfert comprenant au moins une plateforme de transfert pour transférer au moins une plateforme mobile d'une partie du trajet à une autre partie du trajet, permettant de ce fait à l'une desdites plateformes d'en dépasser une autre.

18. Système de surveillance selon la revendication 17, dans lequel la plateforme de transfert comprend :
a. une première partie d'extrémité fixée comprenant au moins un câble supporté par un rail d'extrémité, pour permettre à au moins une plateforme mobile de se déplacer vers et à partir de celle-ci ;
b. une deuxième partie d'extrémité fixée comprenant au moins un câble supporté par un rail d'extrémité, pour permettre à au moins une plateforme mobile de se déplacer vers et à partir de celle-ci ; et
c. une partie centrale coulissante comprenant au moins un câble supporté par un rail central, dans laquelle ledit rail central peut être aligné avec l'un ou l'autre desdits rails d'extrémité.

19. Système de surveillance selon la revendication 3, dans lequel la plateforme auxiliaire comprend en outre une bobine pour dérouler et enrouler le câble.

20. Système de surveillance selon la revendication 19, dans lequel le câble comprend un mécanisme à ressort à l'extrémité qui est reliée à la bobine.

21. Système de surveillance selon la revendication 19, dans lequel la bobine comprend un capteur pour empêcher le câble d'être complètement déroulé.

22. Système de surveillance selon la revendication 19, dans lequel la bobine comprend un capteur pour détecter la distance entre la plateforme mobile et la plateforme auxiliaire.

23. Système de surveillance selon la revendication 3, comprenant en outre un mécanisme pour détacher le câble de la plateforme auxiliaire.

24. Système de surveillance selon la revendication 3, dans lequel la plateforme auxiliaire comprend un système de stabilisation pour stabiliser le mouvement de ladite plateforme auxiliaire.

25. Système de surveillance selon la revendication 3, dans lequel la plateforme auxiliaire comprend des ailes qui sont pliables ou rétractables.

26. Système de surveillance selon la revendication 1, dans lequel la station de commande comprend un ordinateur comprenant un dispositif d'entrée et un dispositif de sortie.

27. Système de surveillance selon la revendication 26, dans lequel la station de commande comprend un PDA.

28. Système de surveillance selon la revendication 26, dans lequel la station de commande commande le mouvement de la plateforme mobile, de la plateforme auxiliaire et de la caméra.

29. Système de surveillance selon la revendication 1, dans lequel la plateforme mobile peut être déplacée le long du câble ou du rail par un système d'éléments à roues comprenant des roues verticales supérieures, des roues verticales inférieures et des roues horizontales.

30. Système de surveillance selon la revendication 29, dans lequel les roues verticales inférieures peuvent être séparées desdites roues verticales supérieures par un mécanisme à ressort.

31. Système de surveillance selon la revendication 1, comprenant en outre une zone extérieure, à l'extérieur d'une zone limitée, dans lequel au moins une plateforme mobile est située dans ladite zone limitée, et ladite caméra peut être positionnée au moins dans ladite zone extérieure afin de visualiser au moins une partie de ladite zone extérieure.

32. Procédé pour détecter un mouvement interdit dans n'importe quelle direction à un ou plusieurs emplacements le long d'une route, ledit procédé comprenant :
a. fournir un système de surveillance comprenant :
1) une ou plusieurs caméras pour détecter ledit mouvement interdit, lesdites une ou plusieurs caméras étant en communication de données avec une station de commande ;
2) une ou plusieurs plateformes mobiles, chacune d'elles pouvant être déplacée le long d'un trajet souhaité le long de ladite route, le trajet comprenant au moins un parmi une ligne de câble et un rail ;
3) une plateforme auxiliaire à laquelle au moins l'une desdites caméras est reliée, dans lequel la plateforme auxiliaire est un mécanisme aérien qui peut être placé et maintenu en l'air en créant des forces aérodynamiques ou en y étant soumis ;
4) un câble enroulable pour relier ladite plateforme auxiliaire à l'une desdites plateformes mobiles ; et
5) une station de commande pour recevoir et traiter des données provenant desdites une ou plusieurs caméras et leur transférer des données, et pour commander le mouvement de ladite plateforme mobile, de ladite plateforme auxiliaire et de ladite caméra ;
b. fournir une source d'énergie pour transférer de l'énergie à ladite plateforme mobile et à ladite plateforme auxiliaire ;
c. transférer de l'énergie à ladite plateforme auxiliaire par l'intermédiaire dudit câble ;
d. éventuellement diriger ladite plateforme mobile pour qu'elle se déplace le long dudit trajet ;
e. détecter un mouvement interdit le long de ladite route par ladite caméra ; et
f. transférer des données de ladite caméra à ladite station de commande.

33. Procédé selon la revendication 32, dans lequel ladite plateforme auxiliaire peut se déplacer de manière indépendante.

34. Procédé selon la revendication 33, comprenant la commande à distance de la plateforme auxiliaire qui est choisie parmi n'importe quel élément du groupe constitué de :
a. un hélicoptère commandé à distance ;
b. un avion à décollage et atterrissage verticaux ;
c. un parachute motorisé ;
d. un parapente ;
e. un dirigeable souple commandé à distance ; et
f. un avion commandé à distance.
